(19) Europäisches Patentamt / European Patent Office / Office européen des brevets

(11) **EP 3 683 122 A1**

(12) **EUROPEAN PATENT APPLICATION**

(43) Date of publication:
22.07.2020 Bulletin 2020/30

(51) Int Cl.:
*B62D 15/02* (2006.01)          *B60Q 1/40* (2006.01)
*G08G 1/16* (2006.01)

(21) Application number: 19198985.4

(22) Date of filing: 23.09.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2019 JP 2019004057**

(71) Applicant: **TOYOTA JIDOSHA KABUSHIKI KAISHA**
**Toyota-shi, Aichi 471 8571 (JP)**

(72) Inventors:
• **TAKAHASHI, Kentaro**
  **Toyota-shi, Aichi 471-8571 (JP)**
• **MORIMOTO, Kazuhiro**
  **Toyota-shi, Aichi 471-8571 (JP)**
• **HONDA, Masaaki**
  **Toyota-shi, Aichi 471-8571 (JP)**

(74) Representative: **J A Kemp LLP**
**14 South Square**
**Gray's Inn**
**London WC1R 5JJ (GB)**

(54) **LANE CHANGE ASSIST APPARATUS**

(57)    A lane change assist apparatus comprises a standby operation device (15; 151; 1511; 152; 1521; 153) provided on a turn signal lever (41). The standby operation device (15; 151; 1511; 152; 1521; 153) outputs a state change request when the standby operation device (15; 151; 1511; 152; 1521; 153) is operated. The lane change assist apparatus changes its state from a non-standby state to a standby state in response to receiving the state change request. The lane change assist apparatus executes a lane change assist control when a state thereof has been changed to the standby state and receives the lane change assist request.

FIG.1

**Description**

**BACKGROUND**

**Field**

The invention relates to a lane change assist apparatus for executing a lane change assist control to automatically move a vehicle from a currently-vehicle-moving lane in which the vehicle moves currently to a next lane next to the currently-vehicle-moving lane.

**Description of the related art**

There is known a lane change assist apparatus for executing a lane change assist control to assist a steering operation of rotating a steering wheel of a vehicle performed to change lanes in which the vehicle moves by a driver of the vehicle to move the vehicle from a currently-vehicle-moving lane in which the vehicle moves currently to a next lane next to the currently-vehicle-moving lane (see JP 2018-103769 A). The lane change assist apparatus automatically changes the lanes in which the vehicle moves by causing an electric power steering system to apply a steering torque to a steering mechanism without the steering operation performed by the driver. The lane change assist apparatus described in JP 2018-103769 A is configured to detect an operation applied to a turn signal lever performed by the driver. In addition, the lane change assist apparatus described in JP 2018-103769 A is configured to start the lane change assist control when the lane change assist apparatus detects the operation applied to the turn signal lever performed by the driver.

Regulations of the United Nations limit roads where an execution of the lane change assist control is permitted to specified roads. In particular, the execution of the lane change assist control is permitted when the vehicle moves on the road satisfying a condition that (i) the road includes two or more lanes in the same direction, (ii) walking persons and bicycles are not permitted to enter into the road, and (iii) a center median is provided in the road. Hereinafter, the road satisfying the condition described above will be referred to as "the lane-change-permitted road".

The driver of the vehicle needs to perform a standby operation for changing a state of the vehicle change assist apparatus to a standby state before the driver performs a lane change assist request operation for requesting the execution of the lane change assist control. The lane change assist apparatus accepts the lane change assist request operation when (i) the vehicle moves on the lane-change-permitted road, and (ii) the state of the lane change assist apparatus has been changed to the standby state. The driver needs to perform (i) the standby operation for changing the state of the lane change assist apparatus to the standby state after the driver enters the vehicle into the lane-change-permitted road and (ii) the lane change assist request operation for requesting the execution of the lane change assist control. The lane change assist control is executed when the standby operation and the lane change assist request operation are performed appropriately.

The lane change assist apparatus changes its state from the standby state to a non-standby state when the vehicle moves out of the lane-change-permitted road. In this case, the driver needs to enter the vehicle into the lane-change-permitted road again and perform the standby operation when the driver desires to causing the lane change assist apparatus to execute the lane change assist control.

As described above, the driver needs to perform both of the standby operation and the lane change assist request operation for causing the lane change assist apparatus to execute the lane change assist control under the regulations of the United Nations. The standby operation and the lane change request operation are different from each other. Thus, the driver may feel these operations complicated or difficult.

**SUMMARY**

The invention has been made for solving problems described above. An object of the invention is to provide a lane change assist apparatus of the vehicle in which the driver can easily perform operations necessary to causing the lane change assist apparatus to execute the lane change assist control.

A lane change assist apparatus applied to a vehicle according to the invention comprises a turn signal lever and an electronic control unit. The turn signal lever is provided so as to turn about a turn axis of the turn signal lever. The turn axis of the turn signal lever extends perpendicular to a longitudinal axis of the turn signal lever. The electronic control unit is configured to execute a lane change assist control to automatically move the vehicle from a currently-vehicle-moving lane to a next lane. The currently-vehicle-moving lane is a lane in which the vehicle moves currently. The next lane is a lane next to the currently-vehicle-moving lane.

The turn signal lever is configured to output a turn signal blinking request to the electronic control unit when the turn signal lever is turned by a driver of the vehicle.

The electronic control unit is configured to blink turn signals of the vehicle in response to receiving the turn signal blinking request from the turn signal lever.

The turn signal lever is configured to output a lane change assist request to the electronic control unit when the turn signal lever is turned.

The lane change assist apparatus further comprises a standby operation device provided on the turn signal lever.

The standby operation device is configured to output a state change request to the electronic control unit when the standby operation device is operated.

The electronic control unit is further configured to change a state of the electronic control unit from a non-standby state to a standby state in response to receiving the state change request. The non-standby state is a state that the electronic control unit does not accept the lane change assist request. The standby state is a state that electronic control unit accepts the lane change assist request.

The electronic control unit is configured to execute the lane change assist control when (i) the state of the electronic control unit has been changed to the standby state, and (ii) the electronic control unit receives the lane change assist request.

The lane change assist apparatus according to the invention includes the turn signal lever, the electronic control unit, and the standby operation device. The electronic control unit is configured to execute the lane change assist control to automatically move the vehicle from the currently-vehicle-moving lane to the next lane. For example, the electronic control unit moves the vehicle from the currently-vehicle-moving lane to the next lane by applying a steering torque to a steering mechanism of the vehicle to steer vehicle wheels to be steered when the electronic control unit determines that the vehicle can be moved from the currently-vehicle-moving lane to the next lane safely, based on a situation of the next lane.

The driver can cause the turn signal lever to output the lane change assist request to the electronic control unit by turning the turn signal lever when the driver desires to cause the electronic control unit to execute the lane change assist control. The turn signal lever is also used by the driver to blink the turn signals. The electronic control unit is configured to receive the lane change assist request output from the turn signal lever by the driver performing an operation of turning the turn signal lever to cause the turn signal lever to output the lane change assist request. Hereinafter, the operation of turning the turn signal lever to causing the turn signal lever to output the lane change assist request, will be referred to as "the lane change assist request operation".

The electronic control unit does not execute the lane change assist control when the driver performs the lane change assist request operation only. The driver needs to operate the standby operation device to causing the standby operation device to output the state change request to the electronic control unit before the driver performs the lane change assist request operation. The standby operation device is provided for the driver to change the state of the electronic control unit from the non-standby state to the standby state. The standby operation device is configured to output the state change request to request the electronic control unit to change the state of the electronic control unit from the non-standby state to the standby state when the driver performs an operation of the standby operation device for causing the standby operation device to output the state change request to the electronic control unit. The non-standby state is the state of the electronic control unit that the electronic control unit does not accept the lane change assist request. The standby state is the state of the electronic control unit that the electronic control unit accepts the lane change assist request. Hereinafter, the operation of the standby operation device performed by the driver for causing the standby operation device to output the state change request to the electronic control unit, will be referred to as "the standby operation". For example, the state of the electronic control unit is changed from the non-standby state to the standby state in response to the driver performing the standby operation when the vehicle moves on the lane-change-permitted road that the execution of the lane change assist control is permitted.

The electronic control unit executes the lane change assist control in response to receiving the lane change assist request when the state of the electronic control unit has been changed to the standby state by the driver performing the standby operation.

As described above, the driver needs to perform the standby operation and the lane change assist request operation for causing the electronic control unit to execute the lane change assist control. Thus, it is preferred that the driver can easily perform the standby operation and the lane change assist request operation.

The standby operation device of the lane change assist apparatus according to the invention is provided on the turn signal lever. Therefore, the driver can perform the standby operation and the lane change assist request operation with one hand of the driver. Thus, the driver can perform the standby operation and the lane change assist operation in series. As a result, the driver can easily perform the standby operation and the lane change assist operation necessary to cause the electronic control unit to execute the lane change assist control.

According to an aspect of the invention, the standby operation device may include a push type operation element. According to this aspect, the push type operation element may be mounted on a top end portion of the turn signal lever movably along the longitudinal axis of the turn signal lever and be biased to move along the longitudinal axis of the turn signal lever to project from a top end surface of the turn signal lever. According to this aspect, the standby operation device may be configured to output the state change request to the electronic control unit when the push type operation element is pushed to move along the longitudinal axis of the turn signal lever. According to this aspect, the electronic control unit may be configured to change the state of the electronic control unit to the standby state in response to receiving the state change request from the standby operation device.

The standby operation device according to this aspect of the invention includes the push type operation element provided on the top end portion of the turn signal lever. The push type operation element can move along the longitudinal axis of the turn signal lever and is biased to move along the longitudinal axis of the turn signal lever to project from the top end surface of the turn signal lever. The turn signal lever may be provided to turn about the turn axis of the turn signal lever by a predetermined angle range. A proximate side of the turn signal lever is a side of the turn signal lever near a portion of the turn signal lever supported pivotally. In other word, the proximate side of the turn signal lever is the side of the turn signal lever near the turn axis of the turn signal lever. A distal side of the turn signal lever is a side of the turn signal lever away from the turn axis of the turn signal lever. In other words, the distal side of the turn signal lever is the side of the turn signal lever near a free end of the turn signal lever.

The push type operation element of the standby operation device is moved toward the proximate side of the turn signal lever when a top of the push type operation element is pushed toward the proximate side of the turn signal lever. The state change request is output from the standby operation device to the electronic control unit when the push type operation element is moved toward the proximate side of the turn signal lever. Therefore, the driver can change the state of the electronic control unit from the non-standby state to the standby state by pushing the push type operation element toward the proximate side of the turn signal lever against a biasing force applied to the push type operation element. In addition, the driver can perform the lane change assist request operation with performing the standby operation. Thus, the driver can easily perform the standby operation and the lane change assist request operation necessary to cause the electronic control unit to execute the lane change assist control.

According to another aspect of the invention, the push type operation element may be provided with a groove. The groove may be formed on a top end portion of the push type operation element. In addition, the groove may extend in a longitudinal direction of the vehicle so as to receive a finger of the driver.

With this aspect of the invention, the groove is formed on the top end portion of the push type operation element, extending in the longitudinal direction of the vehicle so as to receive the finger of the driver. For example, the groove may preferably have a U-shaped groove recessed in an arc shape or having an arc-shaped section. The driver can easily enter the own finger in the groove since the groove is formed, extending in the longitudinal direction of the vehicle. Then, the driver can perform an operation of pushing the push type operation element as the standby operation by entering the own finger in the groove and pushing the push type operation element. In addition, the driver can perform the lane change assist request operation with keeping the own finger in the groove. Therefore, the driver can easily perform the standby operation and the lane change assist request operation necessary to cause the electronic control unit to execute the lane change assist control.

According to further another aspect of the invention, the standby operation device may include a touch sensor. The touch sensor may be provided on a top end portion of the turn signal lever such that a finger of the driver does not touch the touch sensor when the driver turns the turn signal lever to cause the turn signal lever to output the turn signal blinking request and not to output the lane change assist request. According to this aspect, the standby operation device may be configured to output the state change request to the electronic control unit when the driver touches the touch sensor with the finger of the driver. According to this aspect, the electronic control unit may be configured to change the state of the electronic control unit to the standby state in response to receiving the state change request from the standby operation device.

With this aspect of the invention, the standby operation device includes the touch sensor on the top end portion of the turn signal lever. The standby operation device is configured to output the state change request to the electronic control unit when the driver touches the touch sensor with the own finger. The touch sensor is not provided at a portion of the turn signal lever which the finger of the driver touches when the driver turns the turn signal lever to cause the turn signal lever to output the turn signal blinking request and not to output the lane change assist request. Thus, the state of the electronic control unit is not changed to the standby state when the driver turns the turn signal lever to cause the turn signal lever to output the turn signal blinking request and not to output the lane change assist request. The driver can change the state of the electronic control unit from the non-standby state to the standby state by touching the touch sensor with the own finger when the driver desires to cause the electronic control unit to execute the lane change assist control. In addition, the driver can perform the lane change assist request operation with touching the touch sensor with the own finger. Therefore, the driver can easily perform the standby operation and the lane change assist request operation necessary to cause the electronic control unit to execute the lane change assist control.

According to further another aspect of the invention, the turn signal lever may be provided with a groove. The groove may be is formed on a top end portion of the turn signal lever. In addition, the groove may extend in a longitudinal direction of the vehicle so as to receive the finger of the driver. According to this aspect, the touch sensor may be provided on a wall surface of the turn signal lever defining the groove .

With this aspect of the invention, the groove receiving the finger of the driver is formed on the top end portion of the turn signal lever, extending in the longitudinal direction of the vehicle. Thus, the driver can easily enter the own finger in the groove. For example, the groove may be preferably a U-shaped groove recessed in the arc-shape or having the arc-shaped section. The touch sensor is provided on the wall surface of the turn signal lever defining the groove. Therefore, the driver can easily perform an operation of entering the own finger in the groove to touch the touch sensor as the standby operation. In addition, the driver can easily perform the lane change assist request operation with keeping the own finger in the groove. Therefore, the driver can easily perform the standby operation and the lane change assist request operation necessary to cause the electronic control unit to execute the lane change assist control.

According to further another aspect of the invention, the standby operation device may include touch sensors. The touch sensors may be provided on a peripheral wall surface of a top end portion of the turn signal lever, spacing from each other in a peripheral direction of the turn signal lever. According to this aspect, the standby operation device may be configured to output the state change request to the electronic control unit when the driver touches all of the touch sensors with the finger of the driver. According to this aspect, the electronic control unit may be configured to change the state of the electronic control unit to the standby state in response to receiving the state change request from the standby operation device.

With this aspect of the invention, the standby operation device includes the touch sensors (e.g. two touch sensors) provided on the peripheral wall surface of the top end portion of the turn signal lever, peripherally spacing from each other. Thus, the driver can perform an operation of touching the touch sensors at the same time as the standby operation by holding the turn signal lever, for example, with two fingers of the driver in the radial direction of the turn signal lever. The standby operation device outputs the state change request to the electronic control unit when the driver touches the touch sensors at the same time. Then, the driver can perform the lane change assist request operation with holding the turn signal lever with the own fingers touching the touch sensors. Therefore, the driver can easily perform the standby operation and the lane change assist request operation necessary to cause the electronic control unit to execute the lane change assist control.

According to further aspect of the invention, the standby operation device may include a rotary type operation element. The rotary type operation element may be provided on a top end portion of the turn signal lever so as to turn about the longitudinal axis of the turn signal lever and may be biased to turn in one direction about the longitudinal axis of the turn signal lever. According to this aspect, the standby operation device may be configured to output the state change request to the electronic control unit when the rotary type operation element is turned by a predetermined angle in the other direction about the longitudinal axis of the turn signal lever. According to this aspect, the electronic control unit may be configured to change the state of the electronic control unit to the standby state in response to receiving the state change request from the standby operation device.

With this aspect of the invention, the standby operation device includes the rotary type operation element on the top end portion of the turn signal lever. The rotary type operation element can turn about the longitudinal axis of the turn signal lever and is biased to turn in one directions about the longitudinal axis of the turn signal lever.

The driver can perform the standby operation by turning the rotary type operation element about the longitudinal axis of the turn signal lever against a force biasing the rotary type operation element when the driver desires to cause the electronic control unit to execute the lane change assist control. Thereby, the standby operation device outputs the state change request to the electronic control unit. Then, the driver can perform the lane change assist request operation consecutively after the driver performs an operation of turning the rotary type operation element. Therefore, the driver can easily perform the standby operation and the lane change assist request operation necessary to cause the electronic control unit to execute the lane change assist control.

According to further aspect of the invention, the turn signal lever may be positioned at any of (i) a neutral position, (ii) a first clockwise operation position away from the neutral position clockwise by a first angle about the turn axis of the turn signal lever, (iii) a first counterclockwise operation position away from the neutral position counterclockwise by the first angle about the turn axis of the turn signal lever, (iv) a second clockwise operation position away from the neutral position clockwise by a second angle greater than the first angle about the turn axis of the turn signal lever, and (v) a second counterclockwise operation position away from the neutral position counterclockwise by the second angle about the turn axis of the turn signal lever. According to this aspect, the turn signal lever may be configured to be automatically returned to the neutral position when the driver stops applying a force to the turn signal lever for positioning the turn signal lever at the first clockwise operation position. According to this aspect, the turn signal lever may be configured to be automatically returned to the neutral position when the driver stops applying a force to the turn signal lever for positioning the turn signal lever at the first counterclockwise operation position. According to this aspect, the turn signal lever may be configured to output the turn signal blinking request to the electronic control unit when the turn signal lever is positioned at any of the first clockwise operation position, the first counterclockwise operation position, the second clockwise operation position, and the second counterclockwise operation position. According to this aspect, the turn signal lever may be configured to output the lane change assist request to the electronic control unit when the turn signal lever is held at any of the first clockwise operation position and the first counterclockwise operation position for a predetermined assist request fixed time or more.

With this aspect of the invention, the turn signal lever can be turned to any of (i) the neutral position, (ii) the first clockwise operation position, (iii) the first counterclockwise operation position, (iv) the second clockwise operation position, and (v) the second counterclockwise operation positions. In addition, the turn signal lever is configured to be automatically returned to the neutral position when the driver stops applying the force to the turn signal lever for positioning the turn signal lever at any of the first clockwise operation position and the first counterclockwise operation position. The standby operation device is configured to output the lane change assist request to the electronic control unit when the turn signal lever has been held at the first clockwise operation position or the first counterclockwise operation position for the predetermined assist request fixed time or more. Therefore, the driver can have the lane change assist apparatus notice own intention of desiring to causing the electronic control unit to execute the lane change assist control by holding the turn signal lever at any of the first clockwise operation position and the first counterclockwise operation position for the predetermined assist request fixed time or more. In addition, the driver can cause the electronic control unit to blink the turn signals without executing the lane change assist control by turning the turn signal lever to any of the second clockwise operation position and the second counterclockwise operation position.

According to further another aspect of the invention, the turn signal lever may be configured not to output the lane change assist request to the electronic control unit when the turn signal lever is positioned at any of the second clockwise operation position and the second counterclockwise operation position.

The elements of the invention are not limited to the elements of embodiments and modified examples thereof. The other objects, features and accompanied advantages of the invention can be easily understood from the description of the embodiments and the modified examples thereof of the invention along with the drawings.

## BRIEF DESCRIPTION OF THE DRAWINGS

FIG. 1 is a view for showing a general configuration of a lane change assist apparatus of a vehicle according to an embodiment of the invention.
FIG. 2 is a plan view for showing surrounding sensors and a camera sensor secured to a body of the vehicle.
FIG. 3 is a view used for describing lane-related vehicle information.
FIG. 4 is a view used for describing operations to a turn signal lever.
FIG. 5 is a view for showing a moving path of the vehicle
FIG. 6 is a view for showing a flowchart of the lane change assist start control routine.
FIG. 7 is a perspective view for showing a standby operation device according to a first embodiment of the invention.
FIG. 8 is a perspective view for showing the standby operation device according to a modified example of the first embodiment of the invention.
FIG. 9 is a front view for showing an operation to the standby operation device.
FIG. 10 is a perspective view for showing the standby operation device according to a second embodiment of the invention.
FIG. 11 is a perspective view for showing the standby operation device according to a modified example of the second embodiment of the invention.
FIG. 12 is a perspective view for showing the standby operation device according to a third embodiment of the invention.

## DESCRIPTION OF THE PREFERRED EMBODIMENTS

Below, a lane change assist apparatus of a vehicle according to embodiments of the invention will be described with reference to the drawings.

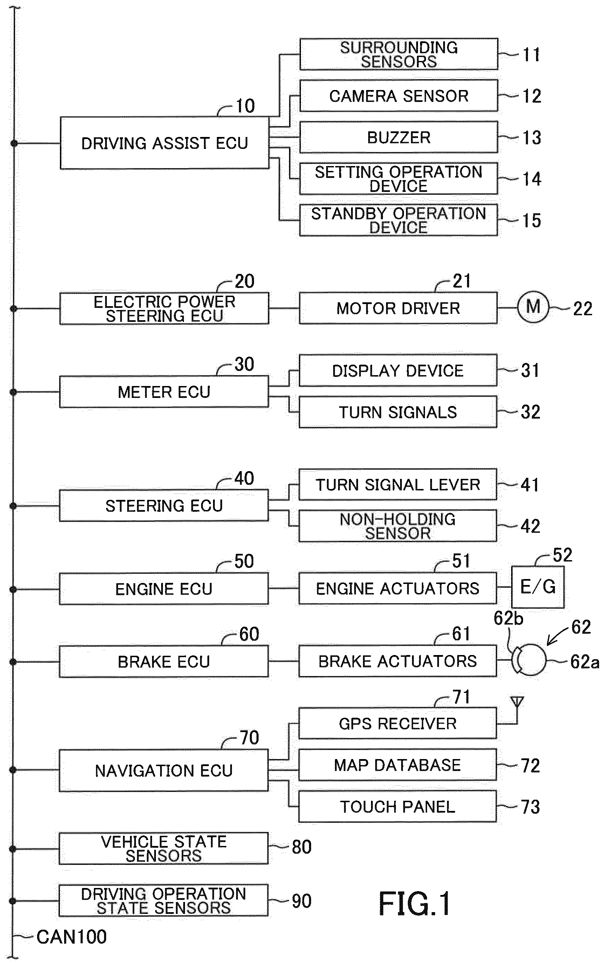

The lane change assist apparatus according to the embodiments of the invention is applied to a vehicle 200. As shown in FIG. 1, the lane change assist apparatus according to the embodiments of the invention includes a driving assist ECU 10, an electric power steering ECU 20, a meter ECU 30, a steering ECU 40, an engine ECU 50, a brake ECU 60, and a navigation ECU 70. Hereinafter, the vehicle 200 to which the lane change assist apparatus according to the embodiments of the invention is applied will be referred to as "the own vehicle 200".

Each of the ECUs 10, 20, 30, 40, 50, 60, and 70 is an electronic control unit including a microcomputer as a main component. The ECUs 10, 20, 30, 40, 50, 60, and 70 can transmit and receive information to or from each other via a CAN (Controller Area Network) 100. In this embodiment, the microcomputer includes a CPU, a ROM, a RAM, a non-volatile memory, and an interface I/F. The CPU is configured or programmed to realize various functions by executing instructions, programs, and routines stored in the ROM. All or some of the ECUs 10, 20, 30, 40, 50, 60, and 70 may be integrated in one.

Several kinds of vehicle state sensors 80 and several kinds of driving operation state sensors 90 are electrically connected to the CAN 100. Each vehicle state sensor 80 is configured to detect a vehicle state. Each driving operation state sensor 90 is configured to detect a driving operation state. The vehicle state sensors 80 may include a vehicle movement speed sensor, a longitudinal acceleration sensor, a lateral acceleration sensor, and a yaw rate sensor. The vehicle movement speed sensor is configured to detect a movement speed of the vehicle 200. The longitudinal acceleration sensor is configured to detect a longitudinal acceleration of the vehicle 200. The lateral acceleration sensor is configured to detect a lateral acceleration of the vehicle 200. The yaw rate sensor is configured to detect a yaw rate of the vehicle 200.

The driving operation state sensors 90 may include an acceleration pedal operation amount sensor, a brake pedal operation amount sensor, a brake switch, a steering torque sensor, and a shift position sensor. The acceleration pedal operation amount sensor is configured to detect an operation amount of an acceleration pedal (not shown) of the own vehicle 200. The brake pedal operation amount sensor is configured to detect an operation amount of a brake pedal (not shown) of the own vehicle 200. The steering torque sensor is configured to detect a steering torque applied to a steering column (not shown) of the own vehicle 200. The shift position sensor is configured to detect a shift position of a transmission (not shown) of the own vehicle 200.

Information detected by the vehicle state sensors 80 and the driving operation state sensors 90 are sent to the CAN 100. Hereinafter, the information sent from the vehicle state sensors 80 and the driving operation state sensors 90 to the CAN 100 will be referred to as "the sensor information". The ECUs 10, 20, 30, 40, 50, 60, and 70 can optionally use the sensor information sent to the CAN 100. One or more of the sensors 80 and 90 may be electrically connected directly to one or more of the ECUs 10, 20, 30, 40, 50, 60, and 70. In this case, the sensor information may be sent from the one or more of the sensors 80 and 90 directly to the one or more of the ECUs 10, 20, 30, 40, 50, 60, and 70 and sent from the one or more of the ECUs 10, 20, 30, 40, 50, 60, and 70 to the CAN 100. The acceleration pedal operation sensor may be electrically connected directly to the engine ECU 50. In this case, the sensor information representing the operation amount of the acceleration pedal is sent from the engine ECU 50 to the CAN 100. In addition, the steering angle sensor may be electrically connected directly to the steering ECU 40. In this case, the sensor information representing the steering angle is sent from the steering ECU 40 to the CAN 100. The other sensors may be configured similarly. Alternatively, the sensor information may be sent from one ECU to any of the remaining ECU directly without transmitting via the CAN 100.

The driving assist ECU 10 is a main control device for providing a driving assist to a driver of the own vehicle 200. In particular, the driving assist ECU 10 is configured to execute a lane change assist control described later.

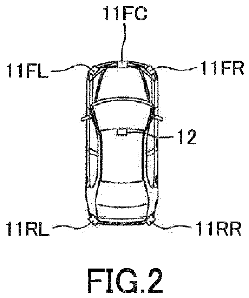

A front center surrounding sensor 11FC, a front right surrounding sensor 11FR, a front left surrounding sensor 11FL, a rear right surrounding sensor 11RR, and a rear left surrounding sensor 11RL shown in FIG. 2 are electrically connected to the driving assist ECU 10. The surrounding sensors 11FC, 11FR, 11FL, 11RR, and 11RL are radar sensors, respectively. The surrounding sensors 11FC, 11FR, 11FL, 11RR, and 11RL have the same arrangements, respectively. However, the surrounding sensors 11FC, 11FR, 11FL, 11RR, and 11RL have different detection ranges, respectively. Below, the surrounding sensors 11FC, 11FR, 11FL, 11RR, and 11RL will be collectively referred to as "the surrounding sensors 11".

Each surrounding sensor 11 has a radar transmitting/receiving section (not shown) and a signal processing section (not shown). The radar transmitting/receiving section is configured to transmit radio waves of a millimeter band. Hereinafter, the radio wave of the millimeter band will be referred to as "the millimeter wave". The radar transmitting/receiving section is further configured to receive the millimeter waves reflected by a standing object existing in a transmitting range of the radar transmitting/receiving section. The standing object may be a vehicle other than the own vehicle 200, a walking person, a bicycle, and a building. Hereinafter, the millimeter wave reflected by the standing object will be referred to as "the reflected wave". The signal processing section is configured to acquire surrounding information each time a predetermined time elapses, based on a difference in phase between the transmitted millimeter wave and the received reflected wave, an attenuation level of the received reflected wave, and a time elapsing from transmitting the millimeter wave to receiving the reflected wave. The signal processing section is configured to send the acquired surrounding information to the driving assist ECU 10. The surrounding information represents a distance between the own vehicle 200 and the standing object, a movement speed of the standing object relative to the own vehicle 200, and a position and an orientation of the standing object relative to the own vehicle 200. The driving assist ECU 10 can detect (i) a longitudinal component and a lateral component of the distance between the own vehicle 200 and the standing object and (ii) a longitudinal component and a lateral component of a relative speed between the own vehicle 200 and the standing object.

As shown in FIG. 2, the front center surrounding sensor 11FC is provided at a front center portion of a body of the own vehicle 200. Thus, the front center surrounding sensor 11FC can detect the standing object existing in an area ahead of the own vehicle 200. The right front surrounding sensor 11FR is provided at a front right corner of the body of the own vehicle 200. Thus, the right front surrounding sensor 11FR can basically detect the standing object existing in an area rightward ahead of the own vehicle 200. The left front surrounding sensor 11FL is provided at a front left corner of the body of the own vehicle 200. Thus, the left front surrounding sensor 11FL can basically detect the standing object existing in an area leftward ahead of the own vehicle 200. The right rear surrounding sensor 11RR is provided at a rear right corner of the body of the own vehicle 200. Thus, the right rear surrounding sensor 11RR can basically detect the standing object existing in an area rightward behind the own vehicle 200. The left rear surrounding sensor 11RL is provided at a rear left corner of the body of the own vehicle 200. Thus, the left rear surrounding sensor 11RL can basically detect the standing object existing in an area leftward behind the own vehicle 200. Hereinafter, the standing object detected by the surrounding sensor 11 may be referred to as "the obstacle".

As described above, the surrounding sensors 11 are the radar sensors, respectively in the embodiments. In this regard, any of the surrounding sensors 11 may be a sensor such as a clearance sonar other than the radar sensor.

A camera sensor 12 is electrically connected to the driving assist ECU 10. The camera sensor 12 includes a camera section (not shown) and a lane recognition section (not shown). The lane recognition section is configured to recognize white lane markings provided on a road by analyzing image data acquired by the camera section, based on a view taken by the camera section. The camera section of the camera sensor 12 is configured to take the view ahead of the own vehicle 200. The lane recognition section of the camera sensor 12 is configured to supply information on the recognized white lane markings to the driving assist ECU 10.

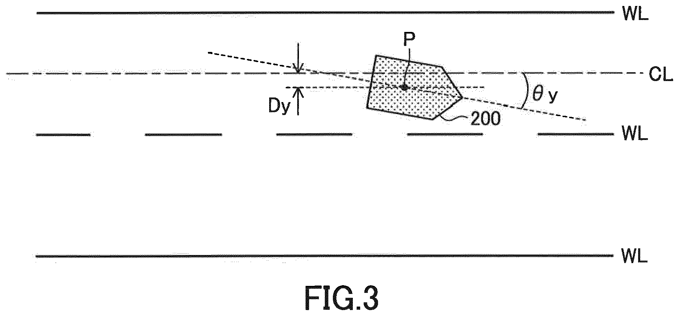

The driving assist ECU 10 is configured to set a lane center line CL as shown in FIG. 3, based on the information supplied from the camera sensor 12. The lane center line CL is a center line between the right and left white lane markings WL defining a lane in which the own vehicle 200 moves currently. In addition, the driving assist ECU 10 is configured to calculate a curvature Cu of the lane center line CL.

In addition, the driving assist ECU 10 is configured to calculate a position and an orientation of the own vehicle 200 in the lane defined by the right and left white lane markings WL. As shown in FIG. 3, the driving assist ECU 10 may be configured to calculate a distance Dy between a base position P of the own vehicle 200 and the lane center line CL in a width direction of the road. In other words, the driving assist ECU 10 may be configured to calculate the distance Dy in the road width direction from the lane center line CL to the own vehicle 200. The base position P of the own vehicle 200 is, for example, a gravity center position of the own vehicle 200. Hereinafter, the distance Dy will be referred to as "the lateral deviation Dy". In addition, the driving assist ECU 10 may be configured to calculate an angle θy defined by an extension direction of the lane center line CL and an orientation of the own vehicle 200. In other words, the driving assist ECU 10 may be configured to calculate the angle θy of the orientation of the own vehicle 200 relative to the extension direction of the lane center line CL in a horizontal direction. Hereinafter, the angle θy will be referred to as "the yaw angle θy". In addition, hereinafter, information representing the curvature Cu, the lateral deviation Dy, and the yaw angle θy will be referred to as "the lane-related vehicle information".

In addition, the camera sensor 12 is configured to supply information on the white lane markings WL to the driving assist ECU 10. The information on the white lane markings WL may be information on (i) the lane in which the own vehicle 200 moves currently and (ii) lanes next to the lane in which the own vehicle 200 moves currently. In particular, the information on the white lane markings WL is, for example, information on (i) kinds of the detected white lane markings WL, i.e., whether each detected white lane marking WL is a solid line or a dashed line, (ii) a lane width or a distance between the adjacent right and left detected white lane markings WL, (iii) shapes of the detected white lane markings WL. The vehicle is forbidden to change the lanes when the white lane marking WL between the lanes is the solid line. The vehicle is permitted to change the lanes when the white lane marking WL between the lanes is the dashed line. The dashed line is the white lane marking broken with constant spaces. Hereinafter, the lane-related vehicle information representing the curvature Cu, the lateral deviation Dy, and the yaw angle θy and the information on the white lane markings WL will be collectively referred to as "the lane information".

In the embodiments, the driving assist ECU 10 is configured to calculate the lane-related vehicle information representing the curvature Cu, the lateral deviation Dy, and the yaw angle θy. In this regard, the camera sensor 12 may be configured to calculate the lane-related vehicle information representing the curvature Cu, the lateral deviation Dy, and the yaw angle θy and supply a result of a calculation of the lane-related vehicle information to the driving assist ECU 10.

Further, the camera sensor 12 can detect the standing object existing ahead of the own vehicle 200, based on the image data. Thus, the camera sensor 12 may be configured to calculate and acquire the surrounding information on the situations ahead of the own vehicle 200 in addition to the lane information. In this case, the camera sensor 12 may include a synthesizing processing section (not shown) configured to synthesize (i) the surrounding information acquired by the front center surrounding sensor 11FC, the right front surrounding sensor 11FR, and the left front surrounding sensor 11FL and (ii) the surrounding information acquired by the camera sensor 12 to produce the surrounding information on the area ahead of the own vehicle 200 with high detection accuracy. In this case, the camera sensor 12 is configured to supply the surrounding information produced by the synthesizing processing section to the driving assist ECU 10 as the surrounding information on the area ahead of the own vehicle 200.

A buzzer 13 is electrically connected to the driving assist ECU 10. The buzzer 13 is configured to generate sounds when a buzzer sound signal is input from the driving assist ECU 10. The driving assist ECU 10 is configured to cause the buzzer 13 to generate the sounds when the driving assist ECU 10 intends to inform the driver of the driving assist situation and alert the driver.

The driving assist ECU 10 is configured to execute the lane change assist control, based on the surrounding information supplied from the surrounding sensors 11, the lane information acquired, based on a white lane marking recognition performed by the camera sensor 12, the vehicle states detected by the vehicle state sensors 80, and the driving operation states detected by the driving operation state sensors 90.

A setting operation device 14 is electrically connected to the driving assist ECU 10. The setting operation device 14 is operated by the driver. The driver uses the setting operation device 14 for performing various settings. The setting operation device 14 may be provided on a steering wheel of the own vehicle 200. The driving assist ECU 10 is configured to execute various setting processes when the driving assist ECU 10 receives setting signals from the setting operation device 14.

Further, a standby operation device 15 is electrically connected to the driving assist ECU 10. The standby operation device 15 is operated by the driver. The standby operation device 15 is provided on a turn signal lever 41 described later. The standby operation device 15 changes a control state of the driving assist ECU 10 from a non-standby state to a standby state. The standby operation device 15 is configured to send a standby operation signal representing an operation state of the standby operation device 15 to the driving assist ECU 10. Details of the standby operation device 15 will be described later.

The electric power steering ECU 20 is a control device of controlling an activation of an electric power steering apparatus. The electric power steering ECU 20 is electrically connected to a motor driver 21. The motor driver 21 is electrically connected to a steering motor 22. The steering motor 22 is built in a steering mechanism (not shown) of the own vehicle 200. The steering mechanism includes the steering wheel, a steering shaft connected to the steering wheel, and a steering gear mechanism. The electric power steering ECU 20 is configured to detect the steering torque input to the steering wheel by the driver by the steering torque sensor provided on the steering shaft and control energization of the motor driver 21, based on the detected steering torque to drive the steering motor 22. A steering operation performed by the driver is assisted by the steering torque applied to the steering mechanism by driving the assist motor, i.e., the steering motor 22.

In addition, the electric power steering ECU 20 is configured to drive the steering motor 22 to generate the steering torque corresponding to a control amount specified by a steering command received from the driving assist ECU 10 via the CAN 100. This steering torque is different from the steering assist torque applied to ease the steering operation or the steering wheel operation performed by the driver. This steering torque is applied to the steering mechanism in accordance with the steering command from the driving assist ECU 10 without the steering operation performed by the driver.

The meter ECU 30 is electrically connected to a display device 31 and right and left turn signals 32 or right and left turn signal lamps 32. The display device 31 may be a multi-information display provided in front of a driver's seat of the own vehicle 200. The display device 31 is configured to indicate various information in addition to indicating meter images for indicating measured values such as the vehicle movement speed. The meter ECU 30 may be configured to cause the display device 31 to indicate images specified by display commands received from the driving assist ECU 10, depending on the driving assist state. A head-up display (not shown) may be used as the display device 31 in place of or in addition to the multi-information display. An ECU dedicated for controlling indication on the head-up display is preferably provided when the head-up display is employed as the display device 31.

The meter ECU 30 includes a turn signal drive circuit (not shown). The meter ECU 30 is configured to blink the turn signals 32 which are specified by the turn signal blink command when the meter ECU 30 receives the turn signal blind command via the CAN 100. In addition, the meter ECU 30 is configured to transmit turn signal blink information representing that the turn signals 32 blinks to the CAN 100 while the meter ECU 30 blinks the turn signals 32. Thus, the ECUs 10, 20, 40, 50, 60, and 70 other than the meter ECU 30 can notice that the turn signals 32 blink.

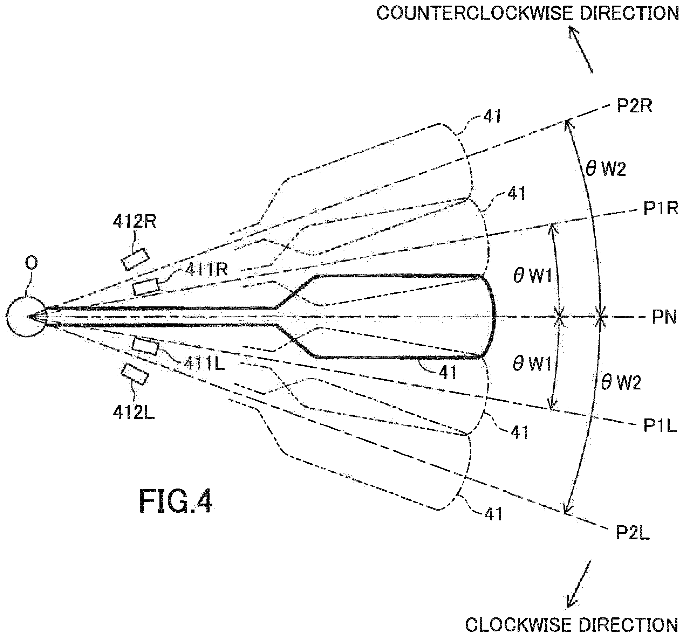

The steering ECU 40 is electrically connected to the turn signal lever 41 and a non-holding sensor 42. The turn signal lever 41 is an operation device used for activating or blinking the turn signals 32. The turn signal lever 41 is mounted on the steering column of the own vehicle 200. As shown in FIG. 4, the turn signal lever 41 is provided to be turned with two step operation strokes about a support axle O in a clockwise direction. Also, the turn signal lever 41 is provided to be turned with two step operation strokes about the support axle O in a counterclockwise direction.

As shown in FIG. 4, the turn signal lever 41 can be operated at a first operation position P1L. The first operation position P1L is a position of the turn signal lever 41 turned by a first stroke from a neutral position PN in the clockwise direction. In other words, the first operation position P1L is a position of the turn signal lever 41 turned by a first angle θW1 about the support axle O from the neutral position PN in the clockwise direction. In addition, the turn signal lever 41 can be operated at a first operation position P1R. The first operation position P1R is a position of the turn signal lever 41 turned by the first stroke from the neutral position PN in the counterclockwise direction. In other words, the first operation position P1R is a position of the turn signal lever 41 turned by the first angle θW1 about the support axle O from the neutral position PN in the counterclockwise direction. In addition, the turn signal lever 41 can be operated at a second operation position P2L. The second operation position P2L is a position of the turn signal lever 41 turned by a second stroke from the neutral position PN in the clockwise direction. In other words, the second operation position P2L is a position of the turn signal lever 41 turned by a second angle $\theta$W2 about the support axle O from the neutral position PN in the clockwise direction. The second stroke is greater than the first stroke, and the second angle $\theta$W2 is greater than the first angle $\theta$W1. In addition, the turn signal lever 41 can be operated at a second operation position P2R. The second operation position P2R is a position of the turn signal lever 41 turned by the second stroke from the neutral position PN in the counterclockwise direction. In other words, the second operation position P2R is a position of the turn signal lever 41 turned by the second angle $\theta$W2 about the support axle O from the neutral position PN in the counterclockwise direction. The neutral position PN is a position of the turn signal lever 41 at which the turn signal lever 41 is not operated. In other words, the neutral position PN is a position of the turn signal lever 41 at which the turn signals 32 are turned off.

The turn signal lever 41 provides the driver with clicking feelings when the driver turns the turn signal lever 41 to the first operation position P1L. Also, the turn signal lever 41 provides the driver with the clicking feelings when the driver turns the turn signal lever 41 to the first operation position P1R. The turn signal lever 41 is configured to be mechanically returned to the neutral position PN by a return mechanism such as a spring (not shown) when the driver stops applying an operation force to the turn signal lever 41 for turning the turn signal lever 41 to the first operation position P1L. Also, the turn signal lever 41 is configured to be mechanically returned to the neutral position PN by the return mechanism when the driver stops applying the operation force to the turn signal lever 41 for turning the turn signal lever 41 to the first operation position P1R. The turn signal lever 41 is configured to be held at the second operation position P2L by a mechanical lock mechanism (not shown) even if the driver stops applying the operation force to the turn signal lever 41 for turning the turn signal lever 41 to the second operation position P2L once the turn signal lever 41 is turned to the second operation position P2L P2R by the driver. Also, the turn signal lever 41 is configured to be held at the second operation position P2R by the mechanical lock mechanism even if the driver stops applying the operation force to the turn signal lever 41 to turn the turn signal lever 41 to the second operation position P2R once the turn signal lever 41 is turned to the second operation position P2R by the driver.

The turn signal lever 41 includes a first switch 411L, a first switch 411R, a second switch 412L, and a second switch 412R. The first switch 411L turns to an ON state only when the turn signal lever 41 is turned to the first operation position P1L. The first switch 411R turns to an ON state only when the turn signal lever 41 is turned to the first operation position P1R. The second switch 412L turns to an ON state only when the turn signal lever 41 is turned to the second operation position P2L. The second switch 412R turns to an ON state only when the turn signal lever 41 is turned to the second operation position P2R.

The first switch 411L is configured to transmit an ON signal to the steering ECU 40 when the turn signal lever 41 is positioned at the first operation position P1L. The first switch 411R is configured to transmit an ON signal to the steering ECU 40 when the turn signal lever 41 is positioned at the first operation position P1R. The second switch 412L is configured to transmit an ON signal to the steering ECU 40 when the turn signal lever 41 is positioned at the second operation position P2L. The second switch 412R is configured to transmit an ON signal to the steering ECU 40 when the turn signal lever 41 is positioned at the second operation position P2R.

The turn signal lever 41 locked at the second operation position P2L by the lock mechanism is released and automatically returned to the neutral position PN when the steering wheel is returned to a neutral position. Also, the turn signal lever 41 locked at the second operation position P2L by the lock mechanism is released and automatically returned to the neutral position PN when the driver operates the turn signal lever 41 toward the neutral position. Similarly, the turn signal lever 41 locked at the second operation position P2R by the lock mechanism is released and automatically returned to the neutral position PN when the steering wheel is returned to the neutral position. Also, the turn signal lever 41 locked at the second operation position P2R by the lock mechanism is released and automatically returned to the neutral position PN when the driver operates the turn signal lever 41 toward the neutral position. In other words, the turn signal lever 41 is configured to activate similar to a conventional turn signal blinking device when the turn signal lever 41 is turned to the second operation position P2L. Also, the turn signal lever 41 is configured to activate similar to the conventional turn signal blinking device when the turn signal lever 41 is turned to the second operation position P2R. Hereinafter, an operation performed by the driver to turn the turn signal lever 41 to the first operation position P1L will be referred to as "the small turn operation". Also, an operation performed by the driver to turn the turn signal lever 41 to the first operation position P1R will be referred to as "the small turn operation". Further, an operation performed by the driver to turn the turn signal lever 41 to the second operation position P2L will be referred to as "the large turn operation". Also, an operation performed by the driver to turn the turn signal lever 41 to the second operation position P2R will be referred to as "the large turn operation".

The turn signal lever configured to change the signals output from the switches with the two step operation strokes is known in JP 2005-138647. The turn signal lever having known arrangements may be employed as the turn signal lever 41 of the embodiments.

The turn signal lever 41 is configured to transmit monitor signals representing whether the small turn operation is applied to the turn signal lever 41 to the driving assist ECU 10. In particular, the turn signal lever 41 is configured to transmit (i) a monitor signal representing whether the first switch 411L is in the ON state or an OFF state and (ii) a monitor signal representing whether the first switch 411R is in the ON state or an OFF state to the driving assist ECU 10. In addition, the turn signal lever 41 is configured to transmit monitor signals representing whether the large turn operation is applied to the turn signal lever 41 to the driving assist ECU 10. In particular, the turn signal lever 41 is configured to transmit (i) a monitor signal representing whether the second switch 412L is in the ON state or an OFF state and (ii) a monitor signal representing whether the second switch 412R is in the ON state or an OFF state to the driving assist ECU 10. Hereinafter, the monitor signal representing whether the first switch 411L is in the ON state or the OFF state will be referred as "the small turn operation monitor signal". Also, the monitor signal representing whether the first switch 411R is in the ON state or the OFF state will be referred as "the small turn operation monitor signal" In addition, the monitor signal representing whether the second switch 412L is in the ON state or the OFF state will be referred as "the large turn operation monitor signal". Also, the monitor signal representing whether the second switch 412R is in the ON state or the OFF state will be referred as "the large turn operation monitor signal". The small turn operation monitor signal includes a signal for specifying a direction of turning the turn signal lever 41 or a signal for specifying whether the direction of turning the turn signal lever 41 is the clockwise or counterclockwise direction. Also, the large turn operation monitor signal includes a signal for specifying the direction of turning the turn signal lever 41 or a signal for specifying whether the direction of turning the turn signal lever 41 is the clockwise or counterclockwise direction.

The steering ECU 40 is configured to blink the turn signals 32 corresponding to the direction of turning the turn signal lever 41 when the first switch 411L is in the ON state. Also, the steering ECU 40 is configured to blink the turn signals 32 corresponding to the direction of turning the turn signal lever 41 when the first switch 411R is in the ON state. In particular, the steering ECU 40 is configured to blink the left turn signals 32 when the first switch 411R is in the ON state. Also, the steering ECU 40 is configured to blink the right turn signals 32 while the first switch 411L is in the ON state. The steering ECU 40 is configured to transmit a turn signal blinking command to the meter ECU 30 when the first switch 411L is in the ON state. Also, the steering ECU 40 is configured to transmit the turn signal blinking command to the meter ECU 30 when the first switch 411R is in the ON state. The turn signal blinking command specifies the turn signals 32 to be blinked, based on the direction of turning the turn signal lever 41 or based on whether the turn signal lever 41 is turned clockwise or counterclockwise. The meter ECU 30 is configured to blink the turn signals 32 specified by the turn signal blinking command when the meter ECU 30 receives the turn signal blinking command. The driver can blink the turn signals 32 by applying the small turn operation to the turn signal lever 41.

The steering ECU 40 may be configured to continue transmitting the turn signal blinking commands to the meter ECU 30 for a minimum blinking time when the first switch 411L continues to be in the ON state for a time shorter than the minimum blinking time. Also, the steering ECU 40 may be configured to continue transmitting the turn signal blinking commands to the meter ECU 30 for the minimum blinking time when the first switch 411R continues to be in the ON state for a time shorter than the minimum blinking time. In other words, the steering ECU 40 may be configured to continue transmitting the turn signal blinking commands to the meter ECU 30 for the minimum blinking time to blink the turn signals 32 with a minimum number when the number of blinking the turn signals 32 is smaller than the minimum number. If the steering ECU 40 is configured as such, the driver can blink the turn signals 32 by a set number (i.e., the minimum number) only by applying the small turn operation instantaneously to the turn signal lever 41. Alternatively, the steering ECU 40 may be configured to continue transmitting the turn signal blinking commands to the meter ECU 30 for a time to blink the turn signals 32 by the set number, independently of the time when the first switch 411L continues to be in the ON state. Also, the steering ECU 40 may be configured to continue transmitting the turn signal blinking commands to the meter ECU 30 for a time to blink the turn signals 32 by the set number, independently of the time when the first switch 411R continues to be in the ON state.

The steering ECU 40 is configured to blink the turn signals 32 corresponding to the direction of turning the turn signal lever 41 when the second switch 412L is in the ON state. Also, the steering ECU 40 is configured to blink the turn signals 32 corresponding to the direction of turning the turn signal lever 41 when the second switch 412R is in the ON state. In particular, the steering ECU 40 is configured to blink the left turn signals 32 when the second switch 412R is in the ON state. Also, the steering ECU 40 is configured to blink the right turn signals 32 when the second switch 412L is in the ON state. The steering ECU 40 is configured to transmit the turn signal blinking command to the meter ECU 30 when the second switch 412L is in the ON state. Also, the steering ECU 40 is configured to transmit the turn signal blinking command to the meter ECU 30 when the second switch 412R is in the ON state. The turn signal blinking command specifies the turn signals 32 to be blinked, based on the direction of turning the turn signal lever 41 or based on whether the turn signal lever 41 is turned clockwise or counterclockwise. The meter ECU 30 is configured to blink the turn signals 32 specified by the turn signal blinking command when the meter ECU 30 receives the turn signal blinking command. The turn signals 32 continues to be blinked until the turn signal lever 41 is turned to the neutral position PN by the driver, or the steering wheel is turned to the neutral position by the driver after the large turn operation is applied to the turn signal lever 41.

The driving assist ECU 10 is configured to receive the small and large turn operation monitor signals. The driving assist ECU 10 is configured to measure an ON duration time that the small turn operation monitor signal continues representing that the first switch 411L is in the ON state. In other words, the driving assist ECU 10 is configured to measure the duration time that the turn signal lever 41 continues to be held at the first operation position P1L. Also, the driving assist ECU 10 is configured to measure an ON duration time that the small turn operation monitor signal continues representing that the first switch 411R is in the ON state. In other words, the driving assist ECU 10 is configured to measure the duration time that the turn signal lever 41 continues to be held at the first operation position P1R. The driving assist ECU 10 is configured to determine whether the ON duration time is equal to or longer than a predetermined assist request fixed time (for example, one second).

The driving assist ECU 10 is configured to fix that the driver requests the driving assist ECU 10 to execute the lane change assist control when the ON duration time measured, based on the small turn operation monitor signals is equal to or longer than the predetermined assist request fixed time. The small turn operation of turning the turn signal lever 41 for the predetermined assist request fixed time corresponds to lane change assist request operation of the invention. The driving assist ECU 10 is configured to detect a lane change assist request generated by the driver by detecting that the lane change assist request operation is performed.

The lane change assist control starts to be executed basically when the driving assist ECU 10 detects that the lane change assist request operation is performed.

The turn signal lever 41 is configured to be locked at the second operation position P2L even when the driver stops applying the operation force to the turn signal lever 41 after the driver performs the large turn operation. Also, the turn signal lever 41 is configured to be locked at the second operation position P2R even when the driver stops applying the operation force to the turn signal lever 41 after the driver performs the large turn operation. Similar to when the small turn operation is performed, the turn signal lever 41 may be configured to be automatically returned to the neutral position PN by the mechanical return mechanism when the driver stops applying the operation force to the turn signal lever 41 after the driver performs the large turn operation. With the turn signal lever 41 configured as such, the steering ECU 40 is configured to continue transmitting the turn signal blink commands of blinking the turn signals 32 specified by the direction of turning the turn signal lever 41 until the steering ECU 40 detects that the steering wheel is returned to around the neutral position, based on the steering angle even when the second switch 412L changes from the ON state to the OFF state. Also, the steering ECU 40 is configured to continue transmitting the turn signal blink commands of blinking the turn signals 32 specified by the direction of turning the turn signal lever 41 until the steering ECU 40 detects that the steering wheel is returned to around the neutral position, based on the steering angle even when the second switch 412R changes from the ON state to the OFF state.

The non-holding sensor 42 is configured to detect that the driver does not hold the steering wheel with a hand of the driver. The non-holding sensor 42 is configured to transmit a non-holding detection signal to the driving assist ECU 10 via the CAN 100. The non-holding detection signal represents whether the driver holds the steering wheel with the own hand. The driving assist ECU 10 is configured to determine that a non-holding state occurs when (i) the driving assist ECU 10 executes the lane change assist control, and (ii) the driver does not hold the steering wheel for a predetermined non-holding determination time or more. The driving assist ECU 10 is configured to alert the driver by causing the buzzer 13 to generate sounds when the driving assist ECU 10 determines that the non-holding state occurs. Hereinafter, an alert to the driver realized by the sounds generated by the buzzer 13 will be referred to as "the non-holding alert".

The engine ECU 50 is electrically connected to engine actuators 51. Each engine actuator 51 is configured to change an operation state of an internal combustion engine 52. In the embodiments, the engine 52 is a fuel-injection spark-ignition multi-cylinder engine or a so-called gasoline engine. The engine 52 includes a throttle valve for adjusting an intake air amount or an amount of an air suctioned into the engine 52. The engine actuators 51 include a throttle valve actuator configured to change an opening degree of the throttle valve. The engine ECU 50 can change a torque generated by the engine 52 by controlling activations of the engine actuators 51. The torque generated by the engine 52 is transmitted to vehicle wheels to be driven (not shown) of the own vehicle 200 via the transmission. The engine ECU 50 can change an acceleration state or an acceleration of the own vehicle 200 by controlling the activations of the engine actuators 51 to control a driving force applied to the own vehicle 200.

The brake ECU 60 is electrically connected to a brake actuators 61. Each brake actuator 61 is provided in a hydraulic circuit between a master cylinder (not shown) of the own vehicle 200 and a respective friction brake mechanism 62. The master cylinder is a device configured to compress hydraulic oil by a pressing force applied to the brake pedal of the own vehicle 200. The friction brake mechanisms 62 are provided, corresponding to a left front vehicle wheel, a right front vehicle wheel, a left rear vehicle wheel, and a right rear vehicle wheel of the own vehicle 200, respectively. Each friction brake mechanism 62 includes a brake disc 62a and a brake caliper 62b. Each brake disc 62a is secured to the respective vehicle wheel of the own vehicle 200. Each brake caliper 62b is secured to the body of the own vehicle 200. Each brake actuator 61 is configured to adjust a hydraulic pressure applied to a respective wheel cylinder (not shown) built in the respective brake caliper 62b in accordance with a command sent from the brake ECU 60. Each brake actuator 61 is configured to activate the respective wheel cylinder by the adjusted hydraulic pressure to press a respective brake pad (not shown) to the respective brake disc 62a to generate a friction braking force. The brake ECU 60 can control a braking force applied to the own vehicle 200 by controlling the activations of the brake actuators 61.

The navigation ECU 70 includes a GPS receiver 71, a map database 72, and a touch panel 73 or a display 73 of a touch panel type. The GPS receiver 71 is configured to receive GPS signals. The GPS signals are used for detecting a present position of the own vehicle 200. The map database 72 is configured to store map information. The navigation ECU 70 is configured to specify the present position of the own vehicle 200, based on the GPS signals. In addition, the navigation ECU 70 is configured to execute various calculation processes, based on the present position of the own vehicle 200 and the map information stored in the map database 72 and perform route guidance, using the touch panel 73.

The map information stored in the map database 72 includes road information. The road information includes parameters representing shapes of sections of each road. The parameters representing the shapes of the sections of each road may be (i) curvature radii or curvatures of the sections of each road and (ii) lane widths of the sections of each road. The curvature radius or curvature represents a degree of a curve of the sections of the road. The road information includes road type information, lane number information, and center median information. The driving assist ECU 10 can determine whether the road is a limited highway, based on the road type information. In addition, the driving assist ECU 10 can determine whether the center median is provided on the road.

<Lane Change Assist Control (LCA)>

The lane change assist control is a control to apply the steering torque to the steering mechanism to move the own vehicle 200 from a currently-vehicle-moving lane to a next lane with monitoring surroundings of the own vehicle 200, thereby assisting the steering operation or a lane change operation performed by the driver after the driving assist ECU 10 determines that the own vehicle 200 can change the lanes safely by monitoring the surroundings of the own vehicle 200. The currently-vehicle-moving lane is the lane in which the own vehicle 200 moves currently. The next lane is the lane next to the currently-vehicle-moving lane. The lane change assist control can change the lanes in which the own vehicle 200 moves, without the steering operation or the steering wheel operation performed by the driver.

<Calculation of Target Path>

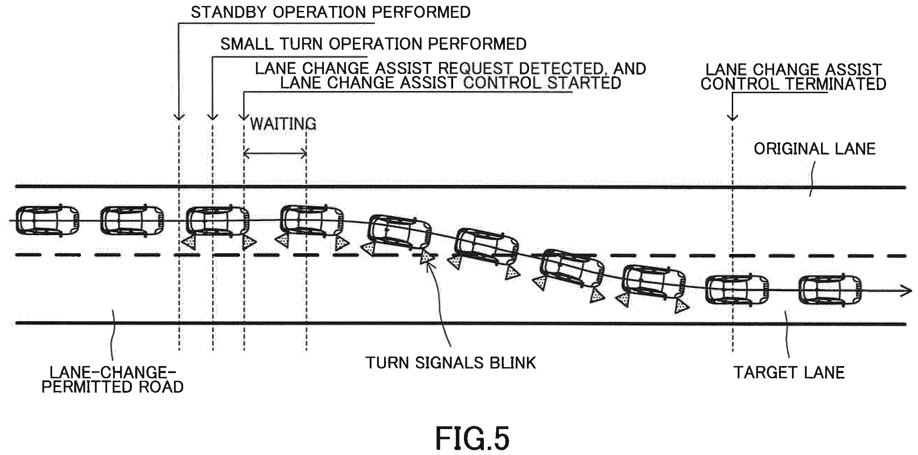

The driving assist ECU 10 calculates a target path for the own vehicle 200, based on (i) the current lane information supplied from the camera sensor 12 and (ii) a vehicle state or a state of the own vehicle 200 when the driving assist ECU 10 executes the lane change assist control. The own vehicle 200 automatically moves from an original lane to a final target lateral position in a target lane along the target path for a target lane change time. The original lane is the lane in which the own vehicle 200 moves before the lanes in which own vehicle 200 moves is changed. The target lane is the lane next to the original lane at a side represented by a direction requested to automatically move the own vehicle 200. The final target lateral position is a center position of the target lane in a width direction of the target lane. The target path may have a shape shown in FIG. 5. The target path is represented by target lateral positions y of the own vehicle 200 at elapsing times t relative to the lane center line CL of the original lane (see FIG. 3). The elapsing time t is a time elapsing since the driving assist ECU 10 starts an execution of the lane change assist control.

In the embodiments, the target lateral positions y are calculated by a target lateral position function y(t) shown by a following expression (1). The target lateral position function y(t) is a quintic function using the elapsing time t.

$$y(t) = a*t5 + b*t4 + c*t3 + d*t2 + e*t + f \quad ...(1)$$

Constants a, b, c, d, e, and f are determined, based on (i) a moving state of the own vehicle 200 at a point of time when the driving assist ECU 10 calculates the target path, (ii) the lane information at the point of time when the driving assist ECU 10 calculates the target path, and (iii) the target lane change time at the point of time when the driving assist ECU 10 calculates the target path. In the embodiments, the constants a, b, c, d, e, and f are calculated so as to acquire a smooth path as the target path by inputting the moving state of the own vehicle 200, the lane information, and the target lane change time to a vehicle model previously stored. The target lateral position function y(t) is acquired by applying the calculated constants a, b, c, d, e, and f to the expression (1). The current target lateral position y is acquired by applying the current elapsing time t to the target lateral position function y(t). As described above, the elapsing time t is the time elapsing since the driving assist ECU 10 starts the execution of the lane change assist control. The constant f represents a lateral position of the own vehicle 200 at a point of time when the elapsing time t is zero. In other words, the constant f represents an initial lateral position of the own vehicle 200 at a point of time when the lane change assist control starts to be executed. Thus, the constant f is set to a value equal to the lateral deviation Dy.

The target lateral positions y may be calculated by using a function optionally set without using the quintic function.

<Calculation of Target Steering Angle>

The driving assist ECU 10 calculates a target steering angle θlca* and generates the steering torque to achieve the calculated target steering angle θlca*. The driving assist ECU 10 determines a target curvature Cu*, a target yaw angle θy*, and a target lateral deviation Dy*, based on the shape of the target path represented by the expression (1) for calculating the target steering angle θlca*.

The driving assist ECU 10 calculates the target steering angle θlca* as a control amount used for executing the lane change assist control by a following expression (2) with a predetermined calculation cycle.

$$\theta lca^* = Klca1*Cu^* + Klca2*(\theta y^* - \theta y) + Klca3*(Dy^* - Dy) + Klca4*\Sigma(Dy^* - Dy)$$

$$...(2)$$

Values represented by the lane-related vehicle information (Cu, Dy, θy) at present or a point of time of the calculation are used as the yaw angle θy and the lateral deviation Dy in the expression (2). Parameters Klca1, Klca2, Klca3, and Klca4 are control gains.

A first term of a right side of the expression (2) is a steering angle component which functions with a feedforward manner and is determined, depending on the target curvature Cu* determined, based on the shape of the target path. A second term of the right side of the expression (2) is a steering angle component which functions with a feedback manner to decrease a difference between (i) the target yaw angle θy* determined, based on the shape of the target path and (ii) the actual yaw angle θy. A third term of the right side of the expression (2) is a steering angle component which functions with the feedback manner to decrease a difference between (i) the target lateral deviation Dy* determined, based on the shape of the target path and (ii) the actual lateral deviation Dy. A fourth term of the right side of the expression (2) is a steering angle component which functions with the feedback manner to decrease an integral $\Sigma$(Dy* - Dy) of the difference between the target lateral deviation Dy* and the actual lateral deviation Dy.

The driving assist ECU 10 transmits the steering command representing the target steering angle θlca* to the electric power steering ECU 20 each time the driving assist ECU 10 calculates the target steering angle θlca*. Thereby, the own vehicle 200 automatically moves along the target path to change the lanes.

<Execution Permission Conditions of Lane Change Assist Control>

As described above, the lane change assist control starts to be executed when the driving assist ECU 10 detects the lane change assist request. In other words, the lane change assist control starts to be executed when the driving assist ECU 10 determines that the small turn operation continues to be applied to the turn signal lever 41 for the predetermined assist request fixed time. Following conditions for permitting an execution of the lane change assist control are provided.

One of the conditions for permitting the execution of the lane change assist control is a road condition. In particular, the road permitted to execute the lane change assist control needs to satisfy a condition that (i) there are two or more lanes in the same moving direction, (ii) the waking persons and the bicycles are not permitted to enter the road, and (iii) the center median is provided in the road. Hereinafter, the road permitted to execute the lane change assist control will be referred to as "the lane-change-permitted road".

The other condition for permitting the execution of the lane change assist control is a condition that (i) the own vehicle 200 moves on the lane-change-permitted road, (ii) the control state of the driving assist ECU 10 has been changed from the non-standby state to the standby state by an operation applied to the standby operation device 15, and (iii) the lane change assist request operation is applied to the turn signal lever 41. Hereinafter, the operation applied to the standby operation device 15 will be referred to as "the standby operation". It should be noted that the control state of the driving assist ECU 10 is changed from the standby state to the non-standby state when the own vehicle 200 moves out of the lane-change-permitted road.

The lane change assist control is executed when the conditions described above are satisfied.

Therefore, the driver needs to perform the standby operation and the lane change assist request operation when the driver desires to cause the driving assist ECU 10 to execute the lane keep assist control. In particular, the driver needs to (i) perform (i) the standby operation to change the control state of the driving assist ECU 10 from the non-standby state to the standby state after the own vehicle 200 moves into the lane-change-permitted road and (ii) the lane change assist request operation when the driving assist ECU 10 has been in the standby state. The driving assist ECU 10 starts the execution of the lane change assist control in response to detecting that the lane change assist request operation is performed.

<Lane Change Assist Start Control Routine>

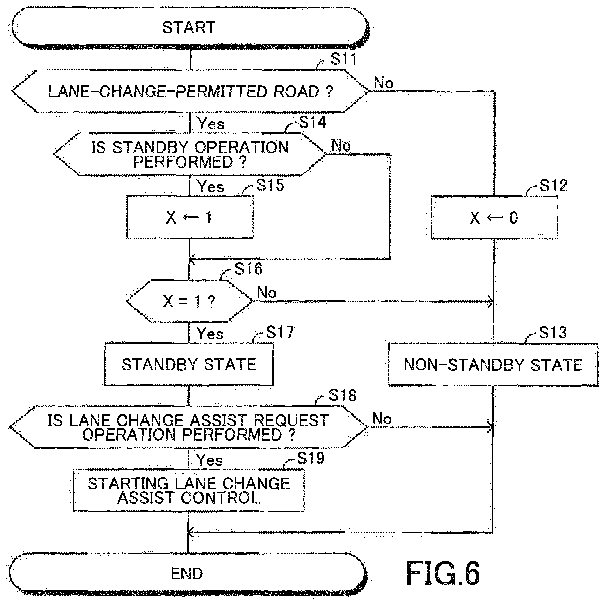

The driving assist ECU 10 executes (i) a process to change the control state of the driving assist ECU 10 from the non-standby state to the standby state and (ii) a process to determine whether the driving assist ECU 10 should accept the lane change assist request operation, depending on the control state of the driving assist ECU 10 or depending on whether the driving assist ECU 10 is in the non-standby state or the standby state. FIG. 6 shows a flowchart of a lane change assist start control routine including the processes described above. The driving assist ECU 10 executes the lane change assist start control routine with the predetermined calculation cycle.

The driving assist ECU 10 starts the execution of the lane change assist start control routine and determines whether the road on which the own vehicle 200 moves currently, is the lane-change-permitted road at a step S11. Hereinafter, the road on which the own vehicle 200 moves currently will be referred to as "the currently-vehicle-moving road". The driving assist ECU 10 may be configured to determine whether the currently-vehicle-moving road is the lane-change-permitted road, based on the current position information and the map information (in particular, the road information) when the map information stored in the map database 72 includes the road information for determining whether the currently-vehicle-moving road is the lane-change-permitted road.

Alternatively, the driving assist ECU 10 may be configured to determine whether the currently-vehicle-moving road is the lane-change-permitted road by analyzing the image data acquired by the camera sensor 12.

Alternatively, the driving assist ECU 10 may be configured to determine whether the currently-vehicle-moving road is the lane-change-permitted road by using the road information which the driving assist ECU 10 acquires from outside facilities. The road information which the driving assist ECU 10 acquires from the outside facilities may be (i) the road information transmitted by roadside equipment or (ii) the road information transmitted by a vehicle information center. In this case, the lane change assist apparatus may include a receiver configured to receive the road information transmitted from the outside facilities. Then, the lane change assist apparatus may be configured to supply the road information received by the receiver to the driving assist ECU 10 via the CAN 100.

When the driving assist ECU 10 determines that the currently-vehicle-moving road is not the lane-change-permitted road, the driving assist ECU 10 determines "No" at the step S11 and then, proceeds with the process to a step S12 to set a value of a standby operation completed flag X to "0". The standby operation completed flag X represents whether the standby operation is completed. The standby operation completed flag X represents that the standby operation is completed when the value of the standby operation completed flag X is "1". On the other hand, the standby operation completed flag X represents that the standby operation is not completed when the value of the standby operation completed flag X is "0". The initial value of the standby operation completed flag X is "0".

Next, the driving assist ECU 10 sets its control state to the non-standby state at a step S13 and then, terminates an execution of the lane change assist start control routine once. The driving assist ECU 10 executes the lane change assist start control routine with the predetermined calculation cycle. Therefore, processes described above are repeatedly executed when the own vehicle 200 does not move into the lane-change-permitted road.

When the own vehicle 200 moves into the lane-change-permitted road, the driving assist ECU 10 determines "Yes" at the step S11 and then, proceeds with the process to a step S14. At the step S14, the driving assist ECU 10 determines whether the standby operation applied to the standby operation device 15 is performed. When the driving assist ECU 10 does not detect that the standby operation is performed, the driving assist ECU 10 proceeds with the process directly to a step S16 to determine whether the value of the standby operation completed flag X is "1".

At this moment, the value of the standby operation completed flag X is "0". Therefore, the driving assist ECU 10 determines "No" at the step S16 and then, proceeds with the process to the step 13. Thereby, the control state of the driving assist ECU 10 is maintained at the non-standby state.

When (i) the own vehicle 200 moves on the lane-change-permitted road, and (ii) the driver performs the standby operation applied to the standby operation device 15, the driving assist ECU 10 detects that the standby operation is performed. In this case, the driving assist ECU 10 determines "Yes" at the step S14 and then, proceeds with the process to a step S15. At the step S15, the driving assist ECU 10 sets the value of the standby operation completed flag X to "1". Next, the driving assist ECU 10 proceeds with the process to the step S16 to determine whether the value of the standby operation completed flag X is "1".

At this moment, the value of the standby operation completed flag X is set to "1". Therefore, the driving assist ECU 10 determines "Yes" at the step S16 and then, proceeds with the process to a step S17 to set the control state of the driving assist ECU 10 to the standby state. Thus, the control state of the driving assist ECU 10 changes from the non-standby state to the standby state.

After the driving assist ECU 10 sets its control state to the standby state, the driving assist ECU 10 proceeds with the process to a step S18 to determine whether the lane change assist request operation is performed. The lane change assist request operation is the small turn operation of turning the turn signal lever 41 continued for the predetermined assist request fixed time or more. When the driving assist ECU 10 does not detect that the lane change assist request operation is performed, the driving assist ECU 10 determines "No" at the step S18 and then, terminates the execution of the lane change assist start control routine once.

The driving assist ECU 10 executes the lane change assist start control routine with the predetermined calculation cycle. The control state of the driving assist ECU 10 is maintained at the standby state when the value of the standby operation completed flag X is set to "1". In this case, the driving assist ECU 10 determines "No" at the step S14, determines "Yes" at the step S16, and executes a process of the step S17 while the own vehicle 200 moves on the lane-change-permitted road even when the driver stops operating the standby operation device 15.

When (i) the control state of the driving assist ECU 10 is maintained at the standby state and (ii) the driving assist ECU 10 detects that the lane change assist request operation is performed, the driving assist ECU 10 determines "Yes" at the step S18 and then, proceeds with the process to a step S19 to start the execution of the lane change assist control.

After the driving assist ECU 10 starts the execution of the lane change assist control, the driving assist ECU 10 terminates the execution of the lane change assist start control routine once. Then, the driving assist ECU 10 starts the execution of the lane change assist start control routine again when the driving assist ECU 10 completes the lane change assist control.

The driving assist ECU 10 confirms the situation of the next lane by using the surrounding sensors 11 and the camera sensor 12 when the driving assist ECU 10 starts the execution of the lane change assist control. Then, the driving assist ECU 10 stands ready to change the lanes until the driving assist ECU 10 determines that the driving assist ECU 10 can changes the lanes safely. The driving assist ECU 10 applies the steering torque to the steering mechanism to steer the vehicle wheels to be steered to move the own vehicle 200 into the next lane when the driving assist ECU 10 determines that the driving assist ECU 10 can change the lanes safely. In addition, the driving assist ECU 10 transmits the turn signal blinking command to the meter ECU 30 to blink the turn signals 32 specified by the direction of turning the turn signal lever 41 when the driving assist ECU 10 executes the lane change assist control. The meter ECU 30 has blinked the turn signals 32 in response to receiving the turn signal blinking command transmitted from the steering ECU 40 in response to the small turn operation being applied to the turn signal lever 41 before the lane change assist control starts to be executed. The meter ECU 30 continues blinking the turn signals 32 in response to the turn signal blinking command transmitted from the driving assist ECU 10 immediately before the lane change assist control is completed even when the steering ECU 40 stops transmitting the turn signal blinking command to the meter ECU 30.

Now, the lane change assist start control routine will be described again. The driving assist ECU 10 determines "No" at the step S11 when the own vehicle 200 moves out of the lane-change-permitted road while the driving assist ECU 10 executes the lane change assist start control routine repeatedly. In this case, the driving assist ECU 10 clears the value of the standby operation completed flag X, i.e., changes the value of the standby operation completed flag X from "1" to "0" at the step S12. In addition, the driving assist ECU 10 sets its control state to the non-standby state, independently of whether the control state of the driving assist ECU 10 has been the standby state at the step S13. In this case, the driving assist ECU 10 does not accept the lane change assist request even when the driver performs the lane change assist request operation. Thus, the lane change assist control is not executed. Thereafter, the control state of the driving assist ECU 10 is maintained at the non-standby state until the driving assist ECU 10 detects that the standby operation is performed even when the own vehicle 200 moves into the lane-change-permitted road. The driver needs to perform (i) the standby operation to cause the driving assist ECU 10 to determine "Yes" at the step S14 and (ii) the lane change assist request operation to cause the driving assist ECU 10 to determine "Yes" at the step S18 when the driver desires to cause the driving assist ECU 10 to execute the lane change assist control.

With the lane change assist start control routine, the control state of the driving assist ECU 10 is set to the standby state when the driving assist ECU 10 detects that the standby operation is performed while the own vehicle 200 moves on the lane-change-permitted road. After the control state of the driving assist ECU 10 is set to the standby state, the control state of the driving assist ECU 10 is maintained at the standby state until the own vehicle 200 moves out of the lane-change-permitted road. The control state of the driving assist ECU 10 is returned to the non-standby state when the own vehicle 200 moves out of the lane-change-permitted road. Then, the lane change assist request is accepted by the driving assist ECU 10, and the lane change assist control starts to be executed when (i) the control state of the driving assist ECU 10 is the standby state, and (ii) the lane change assist request operation is performed.

Therefore, the driver needs to perform the standby operation and the lane change assist request operation in order to start the execution of the lane change assist control. Such a system should prevent the driver from feeling the operations complicated. In addition, such a system should prevent the driver from feeling the operations difficult.

According to the embodiments, the standby operation device 15 is configured such that the driver can easily perform the standby operation and the lane change assist request operation without confusion. Below, the standby operation device 15 will be described.

<Standby Operation Device according to First Embodiment>

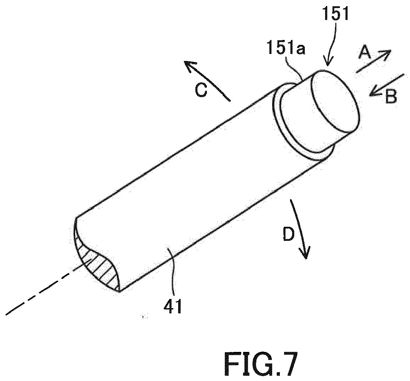

FIG. 7 shows the standby operation device 151 according to a first embodiment of the invention. The standby operation device 151 is formed in the form of a push switch provided on a top end portion of the turn signal lever 41. A switch container (not shown) is provided on the top end portion of the turn signal lever 41. A push type operation element 151a is mounted in the switch container so as to move back and forth along a longitudinal axis of the turn signal lever 41. The push type operation element 151a is biased resiliently by a spring (not shown) toward an outward side in a direction of the longitudinal axis of the turn signal lever 41 as shown by an arrow A. A movement of the push type operation element 151a is limited by a stopper (not shown) to hold a top end of the push type operation element 151a at a position projected from the top end portion of the turn signal lever 41 by a predetermined distance. Thereby, the push type operation element 151a is prevented from moving out of the switch container.

The standby operation device 151 includes a contact (not shown) configured to be turned on when the push type operation element 151a is pushed toward an inward side in the direction of the longitudinal axis of the turn signal lever 41 as shown by an arrow B and moves to an activation position. The push type operation element 151a is moved in the direction shown by the arrow A and is automatically returned to the initial position by the spring, and the contact is turned off when the driver stops applying the operation force to the push type operation element 151a to push the push type operation element 151a. The standby operation device 151 sends a contact signal as a standby operation signal to the driving assist ECU 10.

The driving assist ECU 10 determines that the standby operation is performed in response to detecting an ON signal sent from the standby operation device 151. In this regard, the driving assist ECU 10 may be configured to detect that the standby operation is performed when the contact signal sent from the standby operation device 151 changes from an OFF signal to the ON signal. Alternatively, the driving assist ECU 10 may be configured to detect that the standby operation is performed when the contact signal continues to be the ON signal for a predetermined time. The predetermined time may be preferably set to a time shorter than the predetermined assist request fixed time for fixing the lane change assist request.

The driver pushes the push type operation element 151a with at least one of fingers of the driver such as the forefinger and the middle finger and applies the small turn operation to turn the turn signal lever 41 with at least one of the remaining fingers of the driver in a lane change operation direction shown by an arrow C or D in FIG. 7 when the driver desires to execute the lane change assist control. The driving assist ECU 10 changes its control state to the standby state in response to detecting that the standby operation is performed. Then, the driving assist ECU 10 detects that the lane change assist request operation is performed and starts the execution of the lane change assist control when the driving assist ECU determines that the lane change assist request is fixed in response to a fact that the small turn operation continues to be applied to the turn signal lever 41 for the predetermined assist request fixed time or more.

Thus, the driver operates the turn signal lever 41 to perform the lane change assist request operation with performing an operation of pushing the standby operation device 151. With the standby operation device 151 according to the first embodiment, the driver can easily perform the standby operation and the lane change assist request operation necessary to execute the lane change assist control without concerning about whether the control state of the driving assist ECU 10 is the standby state.

<Standby Operation Device according to Modified Example of First Embodiment>

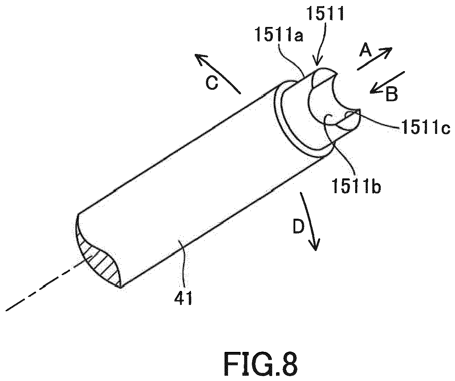

FIG. 8 shows the standby operation device 1511 according to a modified example of the first embodiment of the invention. The standby operation device 1511 includes a push type operation element 1511a in place of the push type operation element 151a of the standby operation device 151 according to the first embodiment. The push type operation element 1511a is the same as the standby operation device 151 according to the first embodiment except that a U-shaped groove 1511b or a U-shape recess 1511b having an arc-shaped section is formed on a top end portion of the push type operation element 1511a.

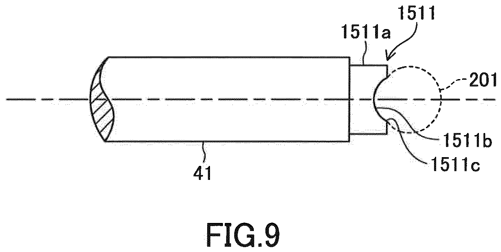

As shown in FIG. 9, the U-shaped groove 1511b is a groove in which a ball or a side portion of the finger 201 of the human can enter. In addition, the U-shaped groove 1511b is formed so as to extend in a longitudinal direction of the own vehicle 200. Thus, the driver can enter the ball or the side portion of the own finger such as the forefinger or the middle finger in the U-shaped groove 1511b with directing the own finger forwards.

The driver enters any one of the own fingers such as the forefinger or the middle finger into the U-shaped groove 1511b, pushes the push type operation element 1511a in a direction shown by an arrow B in FIG. 8, and moves the finger in the lane change operation direction shown by an arrow C or D in FIG. 8 to turn the turn signal lever 41 when the driver desires to execute the lane change assist control. The finger in the U-shaped groove 1511b engages with an edge 1511c of the U-shaped groove 1511b. Thus, the driver can turn the turn signal lever 41 in the lane change operation direction by moving the own finger entered in the U-shaped groove 1511b. The driver needs only to keep the own finger in the U-shaped groove 1511b when the driver turns the turn signal lever 41. Therefore, the driver may stop applying the operation force to the push type operation element 1511a to push the push type operation element 1511a when the driver turns the turn signal lever 41.

With the standby operation device 1511 according to the modified example of the first embodiment, the driver can easily perform the standby operation and the lane change assist request operation necessary to cause the driving assist ECU 10 to execute the lane change assist control without concerning about whether the control state of the driving assist ECU 10 is the standby state.

<Standby Operation Device according to Second Embodiment>

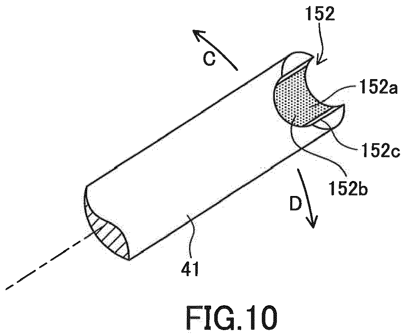

FIG. 10 shows a standby operation device 152 according to a second embodiment of the invention. The standby operation device 152 includes a touch sensor 152a provided on the top end portion of the turn signal lever 41. A U-shaped groove 152b or a U-shaped recess 152b having an arc-shaped section is formed on the top end portion of the turn signal lever 41. The U-shaped groove 152b is a groove having a size into which the side portion or the ball of the finger 201 of the human, similar to the U-shaped groove 1511b according to the modified example of the first embodiment. In addition, the U-shaped groove 152b is formed, extending in the longitudinal direction of the own vehicle 200.

The touch sensor 152a is provided on an inner surface defining the U-shaped groove 152b. The touch sensor 152a may be a capacitive touch sensor configured to detect a change of capacitance to detect a contact state. In addition, a thin-film-shaped detection section of the touch sensor 152a is adhered to the inner surface defining the U-shaped groove 152b. The standby operation device 152 outputs an ON signal when a body of the human contacts the thin-film-shaped detection section. The touch sensor 152a outputs an OFF signal when the body of the human does not contact the thin-film-shaped detection section. The touch sensor 152a sends a detection signal (i.e., the ON signal) as the standby operation signal to the driving assist ECU 10. The driving assist ECU 10 determines that the standby operation is performed or occurs in response to receiving the ON signal output from the touch sensor 152a.

The driver performs a normal turn signal lever operation (i) to push up the turn signal lever 41 in a direction shown by the arrow C in FIG. 10 with touching a peripheral surface of the turn signal lever 41 with at least one of the own fingers to blink the turn signals 32 or (ii) to push down the turn signal lever 41 in a direction shown by the arrow D in FIG. 10 with touching the peripheral surface of the turn signal lever 41 with at least one of the own fingers to blink the turn signals 32 when the driver has an intension of blinking the turn signals 32 without an intention of executing the lane change assist control. Thus, the driver does not enter the own finger in the U-shaped groove 152b to contact the touch sensor 152a when the driver performs the normal turn signal lever operation. The touch sensor 152a does not output the ON signal representing that the standby operation occurs when the driver perform the normal turn signal lever operation.

The driver enters the optional one of the fingers such as the forefinger or the middle finger in the U-shaped groove 152b and moves the finger to turn the turn signal lever 41 in the lane change operation direction shown by the arrow C or D in FIG. 10 when the driver desires to execute the lane change assist control. Thereby, the signal sent from the touch sensor 152a changes from an OFF signal to the ON signal when the finger enters in the U-shaped groove 152b and contacts the touch sensor 152a. Thereby, the driving assist ECU 10 detects that the standby operation is performed. In this regard, the driving assist ECU 10 may be configured to detect that the standby operation is performed or occurs when the detection signal sent from the touch sensor 152a changes from the OFF signal to the ON signal. Alternatively, the driving assist ECU 10 may be configured to detect that the standby operation is performed or occurs when the ON signal continues to be sent to the driving assist ECU 10 as the detection signal from the touch sensor 152a for the predetermined time. The predetermined time may be preferably set to the time shorter than the predetermined assist request fixed time for fixing the lane change assist request.

The finger of the driver engages with the edge 152c of the U-shaped groove 152b when driver moves the finger in the U-shaped groove 152b in the lane change operation direction. Thus, the driver can turn the turn signal lever 41 in the lane change operation direction by moving the finger in the U-shaped groove 152b in the lane change operation direction. Then, the driving assist ECU 10 (i) detects that the lane change assist request operation is performed and (ii) starts the execution of the lane change assist control when the small turn operation continues to be applied to the turn signal lever 41 for the predetermined assist request fixed time or more.

Therefore, the driver can perform the standby operation and the lane change assist request operation in series by entering the own finger in the U-shaped groove 152b and continuing applying the small turn operation to the turn signal lever 41 with the own finger. Thereby, with the standby operation device 152 according to the second embodiment, the driver can easily perform the standby operation and the lane change assist request operation necessary to execute the lane change assist control without needing to concern about whether the control state of the driving assist ECU 10 is the standby state.

<Standby Operation Device according to Modified Example of Second Embodiment>

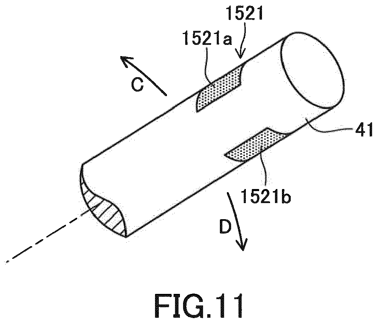

FIG. 11 shows a standby operation device 1521 according to a modified example of the second embodiment of the invention. The standby operation device 1521 is formed by two touch sensors 1521a and 1521b. The touch sensors 1521a and 1521b are provided on the peripheral surface of the turn signal lever 41 near the top end portion of the turn signal lever 41. The touch sensors 1521a and 1521b are the same as the touch sensor 152a according to the second embodiment, respectively. The touch sensors 1521a and 1521b send the detection signals (i.e., the ON and OFF signals) representing the contact state as the standby operation signal to the driving assist ECU 10, respectively.

The touch sensor 1521a is provided on the peripheral surface of the turn signal lever 41 at a vertically upper side of the turn signal lever 41. The touch sensor 1521b is provided on the peripheral surface of the turn signal lever 41 at a vertically lower side of the turn signal lever 41. Therefore, the touch sensors 1521a and 1521b are provided, spacing circumferentially and opposite to each other vertically.

The driving assist ECU 10 determines that the standby operation is performed or occurs when the detection signals output from the touch sensors 1521a and 1521b are both the ON signals, i.e., the detection signals represent that contacts to the touch sensors 1521a and 1521b occur. In this regard, the driving assist ECU 10 may be configured to detect that the standby operation is performed or occurs when the detection signals output from the touch sensors 1521a and 1521b both turn to the ON signals. Alternatively, the driving assist ECU 10 may be configured to detect that the standby operation is performed or occurs when the detection signals output from the touch sensors 1521a and 1521b both continue to be the ON signals for the predetermined time. The predetermined time is preferably set to the time shorter than the predetermined assist request fixed time for fixing the lane change assist request.

The driver performs the normal turn signal lever operation (i) to push up the turn signal lever 41 in a direction shown by an arrow C in FIG. 11 with touching a lower peripheral surface of the turn signal lever 41 with at least one of the own fingers to blink the turn signals 32 or (ii) push down the turn signal lever 41 in a direction shown by an arrow D in FIG. 11 with touching an upper peripheral surface of the turn signal lever 41 with at least one of the own fingers to blink the turn signals 32 when the driver has an intension of blinking the turn signals 32 without an intention of executing the lane change assist control. Thus, the driver's finger may touch only one of the touch sensor 1521a and 1521b. In this case, the driving assist ECU 10 does not determine that the standby operation is performed or occurs when the driver perform the normal turn signal lever operation.

The driver turns the turn signal lever 41 with holding the turn signal lever 41 between (i) at least one of the own fingers touching the upper peripheral surface of the turn signal lever and (ii) at least one of the own fingers touching the lower peripheral surface of the turn signal lever 41 when the driver desires to execute the lane change assist control. For example, the driver turns the turn signal lever 41 with holding the turn signal lever 41 between the forefinger and the middle finger. In this case, the driver's forefinger touches the touch sensor 1521a provided on the upper peripheral surface of the turn signal lever 41, and the driver's middle finger touches the touch sensor 1521b provided on the lower peripheral surface of the turn signal lever 41. In this case, the detection signals output from the touch sensors 1521a and 1521b both become the ON signals representing that the contacts to the touch sensors 1521a and 1521b occur. Thus, the driving assist ECU 10 determines that the standby operation is performed or occurs.

The driver holds the turn signal lever 41 at a state that the small turn operation has been performed. At this moment, the driver may release one of the own fingers from the turn signal lever 41. The driving assist ECU 10 detects that the lane change assist request operation is performed and starts the execution of the lane change assist control when the small turn operation have been applied to the turn signal lever 41 for the predetermined assist request fixed time or more.

Therefore, the driver can perform the operations, in particular, the standby operation and the lane change assist request operation in series by performing the small turn operation with holding the turn signal lever 41 between the own fingers. With the standby operation device 152 according to the modified example of the second embodiment, the driver can easily perform the standby operation and the lane change assist request operation necessary to execute the lane change assist control without needing to concern about whether the standby state occurs.

<Standby Operation Device according to Third Embodiment>

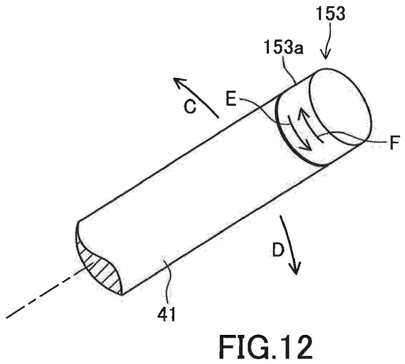

FIG. 12 shows a standby operation device 153 according to a third embodiment of the invention. The standby operation device 153 is formed of a rotary switch provided on the top end portion of the turn signal lever 41. A switch container (not shown) is provided at the top end portion of the turn signal lever 41. A cylindrical rotary type operation element 153a is mounted in the switch container rotationally about the longitudinal axis of the turn signal lever 41. The rotary type operation element 153a is biased resiliently by a spring (not shown) in one direction shown by an arrow E in FIG. 12 about the longitudinal axis of the turn signal lever 41. The rotary type operation element 153a is prevented from moving out of the switch container by a stopper (not shown). In addition, a range of the rotary type operation element 153a to turn about the longitudinal axis of the turn signal lever 41 is limited to a predetermined range.

The rotary type operation element 153a of the standby operation device 153 is set at an initial position by a biasing force of the spring. The standby operation device 153 includes a contact (not shown). The contact is configured to be turned on when the rotary type operation element 153a is turned in a direction shown by an arrow F in FIG. 12 and reaches an activation position. The standby operation device 153 is turned by the spring in a direction shown by the arrow E in FIG. 12 and is automatically returned to the initial position, and the contact is turned off when the driver stops applying an operation force to the rotary type operation element 153a to turn the rotary type operation element 153a. The standby operation device 153 sends a contact signal as the standby operation signal to the driving assist ECU 10.

The driving assist ECU 10 determines that the standby operation is performed in response to detecting an ON signal sent from the standby operation device 153. In this regard, the driving assist ECU 10 may be configured to detect that the standby operation is performed or occurs when the contact signal sent to the driving assist ECU 10 from the standby operation device 153 changes from an OFF signal to the ON signal. Alternatively, the driving assist ECU 10 may be configured to detect that the standby operation is performed or occurs when the contact signal sent to the driving assist ECU 10 from the standby operation device 153 continues to be the ON signal for a predetermined time. The predetermined time may be preferably set to a time shorter than the predetermined assist request fixed time for fixing the lane change assist request.

The driver turns the rotary type operation element 153a with the own fingers and applies the small turn operation to the turn signal lever 41 in the lane change operation direction shown by an arrow C or D in FIG. 12 when the driver desires to execute the lane change assist control. The driving assist ECU 10 changes its control state to the standby state in response to detecting that the standby operation is performed. Then, the driving assist ECU 10 detects that the lane change assist request operation is performed and starts the execution of the lane change assist control when the driving assist ECU 10 determines that the lane change assist request is fixed in response to the fact that the small turn operation continues to be applied to the turn signal lever 41 for the predetermined assist request fixed time or more.

As described above, the driver can apply the lane change assist request operation to the turn signal lever 41 with turning the standby operation device 153. With the standby operation device 153 according to the third embodiment, the driver can easily perform the standby operation and the lane change assist request operation necessary to execute the lane change assist control without needing to concern about whether the standby state occurs.

It should be noted that the invention is not limited to the aforementioned embodiment and various modifications can be employed within the scope of the invention.

The U-shaped groove 1511b and the U-shaped groove 152b formed in the standby operation device 1511 and the standby operation device 152 according to the modified example of the first embodiment and the second embodiment have the arc-shaped sections, respectively. In this regard, the sections of the U-shaped groove 1511b and the U-shaped groove 152b may have any shapes other than the arc shape as far as the human can enter a part of the own finger in the U-shaped groove 1511b and the U-shaped groove 152b.

Further, the touch sensor 152a according to the second embodiment is the capacitive touch sensor. Similarly, the touch sensors 1521a and 1521b according to the modified example of the second embodiment are the capacitive touch sensor. In this regard, the touch sensors 152a, 1521a, and 1521b may be any touch sensors each having a system of sensing the driver's finger touching the touch sensor other than a system of the capacitive touch sensor.

Further, in the second embodiment, the U-shaped groove 152b is formed on the top end portion of the turn signal lever 41, and the touch sensor 152a is provided in the U-shaped groove 152b. In this regard, the U-shaped groove 152b may not be formed on the top end portion of the turn signal lever 41, and the touch sensor 152a may be provided on a surface of the top end portion of the turn signal lever 41. In this case, the finger of the driver does not touch the touch sensor 152a when the driver performs the normal turn signal lever operation. Thus, the ON signal representing that the contact to the touch sensor 152a occurs is not sent unintentionally to the driving assist ECU 10.

Further, in the modified example of the second embodiment, the touch sensor 1521a is provided on the peripheral surface of the turn signal lever 41 at the vertically upper side, and the touch sensor 1521b is provided on the peripheral surface of the turn signal lever 41 at the vertically lower side. Alternatively, the touch sensor 1521a may be provided on the peripheral surface of the turn signal lever 41 at a front side in the longitudinal direction of the own vehicle 200, and the touch sensor 1521b may be provided on the peripheral surface of the turn signal lever 41 at a rear side in the longitudinal direction of the own vehicle 200.

Further, various known control methods other than the lane change assist control described above may be employed.

**Claims**

1. A lane change assist apparatus applied to a vehicle (200), comprising:

   a turn signal lever (41) provided so as to turn about a turn axis of the turn signal lever (41), the turn axis of the turn signal lever (41) extending perpendicular to a longitudinal axis of the turn signal lever (41); and
   an electronic control unit (10, 20, 30, 40, 50, 60, 70) configured to execute a lane change assist control to automatically move the vehicle (200) from a currently-vehicle-moving lane to a next lane, the currently-vehicle-moving lane being a lane in which the vehicle (200) moves currently, the next lane being a lane next to the currently-vehicle-moving lane,

the turn signal lever (41) being configured to output a turn signal blinking request to the electronic control unit (10, 20, 30, 40, 50, 60, 70) when the turn signal lever (41) is turned by a driver of the vehicle (200),

the electronic control unit (10, 20, 30, 40, 50, 60, 70) being configured to blink turn signals (32) of the vehicle (200) in response to receiving the turn signal blinking request from the turn signal lever (41), and

the turn signal lever (41) being configured to output a lane change assist request to the electronic control unit (10, 20, 30, 40, 50, 60, 70) when the turn signal lever (41) is turned,

**characterized in that**

the lane change assist apparatus further comprises a standby operation device (15; 151; 1511; 152; 1521; 153) provided on the turn signal lever (41),

the standby operation device (15; 151; 1511; 152; 1521; 153) is configured to output a state change request to the electronic control unit (10, 20, 30, 40, 50, 60, 70) when the standby operation device (15; 151; 1511; 152; 1521; 153) is operated,

the electronic control unit (10, 20, 30, 40, 50, 60, 70) is further configured to change a state of the electronic control unit (10, 20, 30, 40, 50, 60, 70) from a non-standby state to a standby state in response to receiving the state change request, the non-standby state being a state that the electronic control unit (10, 20, 30, 40, 50, 60, 70) does not accept the lane change assist request, the standby state being a state that electronic control unit (10, 20, 30, 40, 50, 60, 70) accepts the lane change assist request, and

the electronic control unit (10, 20, 30, 40, 50, 60, 70) is configured to execute the lane change assist control when (i) the state of the electronic control unit (10, 20, 30, 40, 50, 60, 70) has been changed to the standby state, and (ii) the electronic control unit (10, 20, 30, 40, 50, 60, 70) receives the lane change assist request.

2. The lane change assist apparatus as set forth in claim 1, **characterized in that**

the standby operation device (151; 1511) includes a push type operation element (151a; 1511a),

the push type operation element (151a; 1511a) is mounted on a top end portion of the turn signal lever (41) movably along the longitudinal axis of the turn signal lever (41) and is biased to move along the longitudinal axis of the turn signal lever (41) to project from a top end surface of the turn signal lever (41),

the standby operation device (151; 1511) is configured to output the state change request to the electronic control unit (10, 20, 30, 40, 50, 60, 70) when the push type operation element (151a; 1511a) is pushed to move along the longitudinal axis of the turn signal lever (41), and

the electronic control unit (10, 20, 30, 40, 50, 60, 70) is configured to change the state of the electronic control unit (10, 20, 30, 40, 50, 60, 70) to the standby state in response to receiving the state change request from the standby operation device (151; 1511).

3. The lane change assist apparatus as set forth in claim 2, **characterized in that**

the push type operation element (1511a) is provided with a groove (1511b), and

the groove (1511b) is formed on a top end portion of the push type operation element (1511a) and extends in a longitudinal direction of the vehicle (200) so as to receive a finger (201) of the driver.

4. The lane change assist apparatus as set forth in claim 1, **characterized in that**

the standby operation device (152) includes a touch sensor (152a),

the touch sensor (152a) is provided on a top end portion of the turn signal lever (41) such that a finger (201) of the driver does not touch the touch sensor (152a) when the driver turns the turn signal lever (41) to cause the turn signal lever (41) to output the turn signal blinking request and not to output the lane change assist request,

the standby operation device (152) is configured to output the state change request to the electronic control unit (10, 20, 30, 40, 50, 60, 70) when the driver touches the touch sensor (152a) with the finger (201) of the driver, and

the electronic control unit (10, 20, 30, 40, 50, 60, 70) is configured to change the state of the electronic control unit (10, 20, 30, 40, 50, 60, 70) to the standby state in response to receiving the state change request from the standby operation device (152).

5. The lane change assist apparatus as set forth in claim 4, **characterized in that**

the turn signal lever (41) is provided with a groove (152b),

the groove (152b) is formed on a top end portion of the turn signal lever (41) and extends in a longitudinal direction of the vehicle (200) so as to receive the finger (201) of the driver, and
the touch sensor (152a) is provided on a wall surface of the turn signal lever (41) defining the groove (152b).

6. The lane change assist apparatus as set forth in claim 1, **characterized in that**

the standby operation device (1521) includes touch sensors (1521a, 1521b),
the touch sensors (1521a, 1521b) are provided on a peripheral wall surface of a top end portion of the turn signal lever (41), spacing from each other in a peripheral direction of the turn signal lever (41),
the standby operation device (1521) is configured to output the state change request to the electronic control unit (10, 20, 30, 40, 50, 60, 70) when the driver touches all of the touch sensors (1521a, 1521b) with the finger (201) of the driver, and
the electronic control unit (10, 20, 30, 40, 50, 60, 70) is configured to change the state of the electronic control unit (10, 20, 30, 40, 50, 60, 70) to the standby state in response to receiving the state change request from the standby operation device (1521).

7. The lane change assist apparatus as set forth in claim 1, **characterized in that**

the standby operation device (153) includes a rotary type operation element (153a),
the rotary type operation element (153a) is provided on a top end portion of the turn signal lever (41) so as to turn about the longitudinal axis of the turn signal lever (41) and is biased to turn in one direction about the longitudinal axis of the turn signal lever (41),
the standby operation device (153) is configured to output the state change request to the electronic control unit (10, 20, 30, 40, 50, 60, 70) when the rotary type operation element (153a) is turned by a predetermined angle in the other direction about the longitudinal axis of the turn signal lever (41), and
the electronic control unit (10, 20, 30, 40, 50, 60, 70) is configured to change the state of the electronic control unit (10, 20, 30, 40, 50, 60, 70) to the standby state in response to receiving the state change request from the standby operation device (153).

8. The lane change assist apparatus as set forth in any one of claims 1 to 7, **characterized in that**

the turn signal lever (41) can be positioned at any of (i) a neutral position, (ii) a first clockwise operation position away from the neutral position clockwise by a first angle about the turn axis of the turn signal lever (41), (iii) a first counterclockwise operation position away from the neutral position counterclockwise by the first angle about the turn axis of the turn signal lever (41), (iv) a second clockwise operation position away from the neutral position clockwise by a second angle greater than the first angle about the turn axis of the turn signal lever (41), and (v) a second counterclockwise operation position away from the neutral position counterclockwise by the second angle about the turn axis of the turn signal lever (41),
the turn signal lever (41) is configured to be automatically returned to the neutral position when the driver stops applying a force to the turn signal lever (41) for positioning the turn signal lever (41) at the first clockwise operation position,
the turn signal lever (41) is configured to be automatically returned to the neutral position when the driver stops applying a force to the turn signal lever (41) for positioning the turn signal lever (41) at the first counterclockwise operation position,
the turn signal lever (41) is configured to output the turn signal blinking request to the electronic control unit (10, 20, 30, 40, 50, 60, 70) when the turn signal lever (41) is positioned at any of the first clockwise operation position, the first counterclockwise operation position, the second clockwise operation position, and the second counterclockwise operation position, and
the turn signal lever (41) is configured to output the lane change assist request to the electronic control unit (10, 20, 30, 40, 50, 60, 70) when the turn signal lever (41) is held at any of the first clockwise operation position and the first counterclockwise operation position for a predetermined assist request fixed time or more.

9. The lane change assist apparatus as set forth in claim 8, **characterized in that**
the turn signal lever (41) is configured not to output the lane change assist request to the electronic control unit (10, 20, 30, 40, 50, 60, 70) when the turn signal lever (41) is positioned at any of the second clockwise operation position and the second counterclockwise operation position.

FIG.1

**FIG.2**

FIG.3

FIG.4

STANDBY OPERATION PERFORMED

SMALL TURN OPERATION PERFORMED

LANE CHANGE ASSIST REQUEST DETECTED, AND
LANE CHANGE ASSIST CONTROL STARTED

LANE CHANGE ASSIST
CONTROL TERMINATED

WAITING

ORIGINAL LANE

LANE-CHANGE-
PERMITTED ROAD

TURN SIGNALS BLINK

TARGET LANE

**FIG.5**

START

S11

LANE-CHANGE-PERMITTED ROAD ? — No

Yes — S14

IS STANDBY OPERATION PERFORMED ? — No

Yes — S15

$X \leftarrow 1$

S12

$X \leftarrow 0$

S16

$X = 1$ ? — No

Yes — S17

STANDBY STATE

S13

NON-STANDBY STATE

S18

IS LANE CHANGE ASSIST REQUEST OPERATION PERFORMED ? — No

Yes — S19

STARTING LANE CHANGE ASSIST CONTROL

END          FIG.6

FIG.7

FIG.8

FIG.9

152

152a

152c

152b

41

C

D

FIG.10

1521
1521a
C
41
1521b
D

FIG.11

FIG.12

Europäisches
Patentamt

European
Patent Office

Office européen
des brevets

# EUROPEAN SEARCH REPORT

Application Number

EP 19 19 8985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/178714 A1 (FUJII SHOTA [JP]) 28 June 2018 (2018-06-28) | 1,8,9 | INV. B62D15/02 B60Q1/40 G08G1/16 |
| A | * paragraphs [0014], [0063], [0068], [0071], [0075], [0076], [0104], [0105], [0134] - [0153], [0170], [0171], [0176]; claims; figures * | 2-7 | |
| Y | US 2014/277825 A1 (TIPPELHOFER MARIO [US] ET AL) 18 September 2014 (2014-09-18) * paragraphs [0002], [0012], [0017], [0029], [0030]; claims; figures * | 1,8,9 | |
| A | US 2016/114722 A1 (KIM SUNG EUN [KR] ET AL) 28 April 2016 (2016-04-28) * paragraphs [0013], [0014], [0029] - [0033], [0049]; claims; figures * | 1-9 | |

TECHNICAL FIELDS
SEARCHED (IPC)

B62D
G08G
B60Q

The present search report has been drawn up for all claims

| Place of search | Date of completion of the search | Examiner |
|---|---|---|
| The Hague | 16 March 2020 | Ducher, Alban |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 8985

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2020

| Patent document cited in search report | | Publication date | Patent family member(s) | | Publication date |
|---|---|---|---|---|---|
| US 2018178714 | A1 | 28-06-2018 | DE 102017129517 | A1 | 28-06-2018 |
| | | | JP 6547970 | B2 | 24-07-2019 |
| | | | JP 2018103767 | A | 05-07-2018 |
| | | | US 2018178714 | A1 | 28-06-2018 |
| US 2014277825 | A1 | 18-09-2014 | NONE | | |
| US 2016114722 | A1 | 28-04-2016 | KR 20160047603 | A | 03-05-2016 |
| | | | US 2016114722 | A1 | 28-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018103769 A
- JP 2005138647 A